# EUROPEAN PATENT APPLICATION

(11) **EP 1 764 823 A2**
(43) Date of publication of application: **21.03.2007**
(21) Application number: 06254761.7
(22) Date of filing: 13.09.2006
(51) Int. Cl.: H01J 49/02

(54) **System and method for landing of lons on a gas/liquid interface**

(30) Priority: 16.09.2005 US 228946
(71) Applicant: Purdue Research Foundation, West Lafayette, IN 47906-1075 (US)
(72) Inventor: Gologan, Bogdan, Lafayette, Indiana 47909 (US); Takats, Zoltan, 1037 Budapest (HU); Ouyang, Zheng, West Lafayette, Indiana 47906 (US); Cooks, R. Graham, West Lafayette, Indiana 47906 (US)
(74) Representative: Setna, Rohan P.

(57) **Abstract**

A method of collecting gaseous ions from a mixture of molecules comprising:
converting at least a portion of the molecules into gas phase ions;
separating the ion according to the ions mobility; and
depositing by soft landing the separated ions on one or more surfaces carrying a layer of liquid phase material, the gas phase ions and the liquid phase material forming a gas/liquid interface.

## Description

### RELATED APPLICATIONS

This application is a continuation-in-part of U.S. Application No. 10/942,341, filed September 16, 2004, which is a continuation-in-part of U.S. Application No. 10/355,007, filed December 31, 2002, which claims the benefit of U.S. Provisional Application No. 60/387,241 fled June 7,2002.

The entire contents of the above applications are incorporated herein by reference.

### BACKGROUND

The present invention relates generally to a method for collecting gaseous ionic species from the gas phase and more particularly to a method in which the gaseous ionic species are landed on a liquid phase layer.

Micro arrays having a matrix of positionally defined reagent target spots for performing chemical tests are known. Known reagents are deposited by spotting techniques well known in the art. In analyzing a sample it is reacted with the array and separate chemical tests are performed with the reagent at each spot.

Mass spectrometers of various types have been used to identify molecules including proteins by mass analysis. The molecules are ionized and then introduced into the mass spectrometer for mass analysis. In recent years, mass spectrometers have been used by biochemists to identify both small and large molecules including proteins and to determine the molecular structure of the molecules including proteins.

Mixtures of biological compounds are normally separated by chromatographic techniques before the components of the mixture are mass analyzed. In some instances, chromatographically separated components of the mixture are used to create chips or arrays.

In proteomics the aim is to quantify the expression levels for the complete protein complement, the proteome, in a cell at any given time. The proteome is individual, environment and time dependent, and has an enormous dynamic range of concentration. Separation by two dimensional electrophoresis or electrophoresis and creation of spots on an array is cumbersome and slow. Modern analytical methods such as mass spectrometry are used for final analysis of the separated components of the protein complement.

Soft-landing of ions onto surfaces was proposed in 1977 [4] and successfully demonstrated two decades later [5]. Intact polyatomic ions were mass-selected in a mass spectrometer and deposited onto a surface at low kinetic energies (typically 5-10 eV). SIMS analysis was used to confirm the presence of a soft-landed species, C₃H₁₀Si₂O³⁵Cl⁺, on a fluorinated SAM surface. Evidence suggests that ions with sterically bulky groups have better deposition efficiencies than small ions [6] Organic cations [7] and a 16-mer double-stranded DNA [8] (mass ca. 10 kDa) have also been soft-landed intact onto surfaces as have metal clusters [9]. In some of these cases there is evidence that the molecular entity on the surface is the ion, in others that it is the corresponding neutral molecule. There is even evidence [11] that intact viruses can be ionized, passed through a mass spectrometer under vacuum and collected and remain viable.

Molecular ion soft-landing [4] has been applied in various experiments ranging from studies using chemically inert and structurally organized self-assembled monolayers (SAMs) as substrates for ion storage [5], to studies of ion mobility through ice and vapor deposited films [12, 13]. Simple organic cations [6. 7], metal clusters [9], polysaccharides [14], a nucleotide [8], and intact viruses [15-17] have all been the targets of examination by ion soft landing.

Some investigators [18] have proposed a method that has the potential for generating biologically active protein chips from protein mixtures by mass-selective ion soft-landing. After ionization of the mixture by electrospray (ESI), individual protein ions were mass selected and soft-landed at pre-determined locations on the surface. The results showed that the use of mass spectrometry as a separation method in biology provides high selectivity because components with different molecular formulae can, at least in principle, be easily separated and soft-landed. However, retention of the biological activity of a protein or other biomolecules in the course of this (or any mass spectrometry experiment) is a much more challenging problem.

It is well known that polyols and sugars can efficiently stabilize a protein in an otherwise denaturating environment [19], although the underlying mechanism of this process has not been elucidated. Lakshmi and Nandi [20] in 1976 showed that sucrose and glucose decrease the solubility of phenylalanine, tyrosine, and tryptophan in aqueous solution and suggested that this was due to increased hydrophobic interactions. Another study [21] investigated the effect of sorbitol on the structure of hen egg white lysozyme by nuclear magnetic resonance and pointed out the small but significant changes in protein structure and dynamics upon sorbitol addition, such as motional restriction of some alanine and threonine methyl groups, the appearance of new intramolecular nuclear-Overhauser effect cross-peaks in the hydrophobic core, and changes in protein hydration. These data suggest that proteins, in the presence of polyol based additives, will experience reduced local motions and possibly compression of the entire structure which may explain the reduced level of denaturation under the influence of temperature and pH stress. Overall, the need for a polyol-based liquid environment, for example sucrose or fructose mixtures with glycerol, has proven to be beneficial in stabilizing proteins through freezing point depression, conformational alterations, preferential hydration and domain interface changes. Reduction in backbone mobility and its underlying role as a bacteriostatic agent, make glycerol the medium of choice for short- and long-term storage of valuable proteins and peptides.

In view of the above, it is apparent that there exists a need for the separation, purification, and storage of chemical species by non-destructive, mass spectrometry, in particular, through gentle ionization methods and an appropriate liquid surface for soft landing.

### SUMMARY

In a general aspect of the invention, sample molecules in a mixture of molecules are ionized, separated in the gas phase as ions of different masses, and deposited or soft landed on a substrate where they are stored for later processing or analysis. More particularly, the molecules are ionized by, for example, electrospray ionization, matrix assisted laser desorption ionization or other ionizing means. The ionized molecules of the mixture are separated according to mass, charge and mobility or a combination of these parameters as ions or the corresponding neutrals, and then soft-landed at separate positions on a substrate to form an array.

In particular embodiments, a system for collecting gaseous ions from a mixture of molecules includes an ionizer, a separator, and a surface that is positioned in cooperative relationship with the separator. The ionizer converts at least a portion of the molecules into gas phase ions and the separator separates the ions. The ions land in a layer of liquid phase material on the surface.

The ions may be separated and analyzed with regard, for example, to their mass-to-charge ratio prior to landing. The ions may be accumulated on the gas/liquid interface formed between the liquid phase material and the gas phase ions without neutralization. Alternatively, the ions are accumulated on the gas/liquid interface and are neutralized by landing in the liquid phase material. The ions may be fragmented prior to landing.

Further features and advantages will be apparent from the following description and from the claims.

### BRIEF DESCRIPTION OF THE DRAWINGS

The invention will be more clearly understood from the following description when read in conjunction with the accompanying drawings in which:

FIG. 1 is a flow chart showing the steps in one example for carrying out an embodiment of the present invention.

FIG. 2 is a schematic view of a mass analyzer system for carrying out an embodiment of the present invention.

FIG. 3 is a schematic view of a mass spectrometer instrument used in soft landing components of a protein mixture.

FIG. 4 is the mass spectrum of a mixture of cytochrome c, lysozyme, and apomyoglobin showing ions of various charge states; diamonds were selected for deposition.

FIG. 5 shows the spectra of rinse solutions from surface areas exposed to cytochrome c +9. (FIG. 5A); lysozyme +11 (FIG. 5B) and apomyoglbin +15 (FIG. 5C).

FIGS. 6A and 6B show the spectrum of rinse solutions containing hexa-N-acetyl chitohexaose, and spectrum of digested product of hexa-n-actylchitchexaose by soft-landed lysozme.

FIGS. 7A and 7B show a rotable disk for monitoring surfaces for receiving soft-landed ions and a drive motor.

FIG. 8A shows the spectrum for the substrate hex-N-acetyl chitohexaose (NAG₆) and its lysozyme cleavage product, tetra-N acetylchitotetraose detected by MALDI-TOF on the surface carrying soft-landed lysozme.

FIG. 8B shows the spectrum for soft-landed lysozme on the surface detected by MALDI-TOF.

FIG. 9 shows the spectrum of characteristic tryptic digest fragment of cytochrome C detected on a surface carrying soft-landed trypsin.

FIG. 10 is a schematic of another instrument which includes a linear ion trap.

FIGS. 11A-D show configurations of multi-source ionization with linear ion traps.

FIG. 12 illustrates separation by filtering for ions of particular mass/charge ratios.

FIG. 13 illustrates separation by time in which ions of different mass/charge ratios all pass through the analyzer.

FIGS. 14A and 14B illustrates accumulation followed by separation with selective ejection.

FIGS. 15 A-C illustrates accumulation followed by isolation followed by soft landing.

FIG. 16 illustrates simultaneous operation of accumulation and selective ejection and soft landing.

FIG. 17 illustrates separation of ions based on mobility.

FIG, 18 is a schematic diagram of an instrument showing the collected samples on the surface being ionized by a laser with the released ions being injected back into the mass spectrometer for analysis.

FIG. 19 shows an instrument in which the proteins/peptides are trapped, isolated and then ejected to soft land onto a surface, and after a short delay they may be injected back into the instrument for mass analysis.

FIG. 20a shows a schematic representation of an instrument used for ion soft-landing in accordance with an embodiment of the invention.

FIG. 20b shows another system for ion soft-landing.

FIGs. 21a and 21b show a comparison of an electrospray ionization mass spectrum of an impure sample of lysozyme (FIG. 21a) with that of a purified sample (FIG. 21b) after soft-landing ions of m/z 1430 - 1435 (only the +10 charge state) into a glycerol/sucrose liquid matrix.

FIGS. 22a, 22b, and 22c show a comparison of N-acetylglucosamine hexamer hydrolysis under enzymatic and non-enzymatic conditions.

FIG. 23 shows soft-landing efficiency and specific residual bioactivity of yeast hexokinase plotted as a function of landing energy using fluorinated self-assembled monolayer and 3:2 glycerol/fructose surfaces.

FIG. 24 shows ESSI-MS spectrum of hexokinase in 10mM aqueous ammonium acetate solution buffered at pH 5.

FIG. 25 LDI-MS spectrum of soft-landed lysozyme (M+8H)⁺⁸ on a CF₃-terminated SAM surface.

FIG. 26a shows a UV-MALDI mass spectrum of a surface containing soft-landed [lysozyme+9H]⁹⁺ into glycerol/fructose/p-nitroaniline/water liquid mixture.

FIG. 26b shows a UV-MALDI mass spectrum after soft landing [lysozyme+9H]⁹⁺ into a α-cyano-4-hydroxycinnamic acid:3-aminoquinoline:glycerol liquid mixture.

FIG. 27a shows a ESI-MS spectrum of the lysozyme/cytochrome c binary mixture used for the soft-landing experiment.

FIG. 27b shows a UV-MALDI-MS spectrum after cytochrome c digestion in an enzymatically active liquid surface containing trypsin.

### DETAILED DESCRIPTION

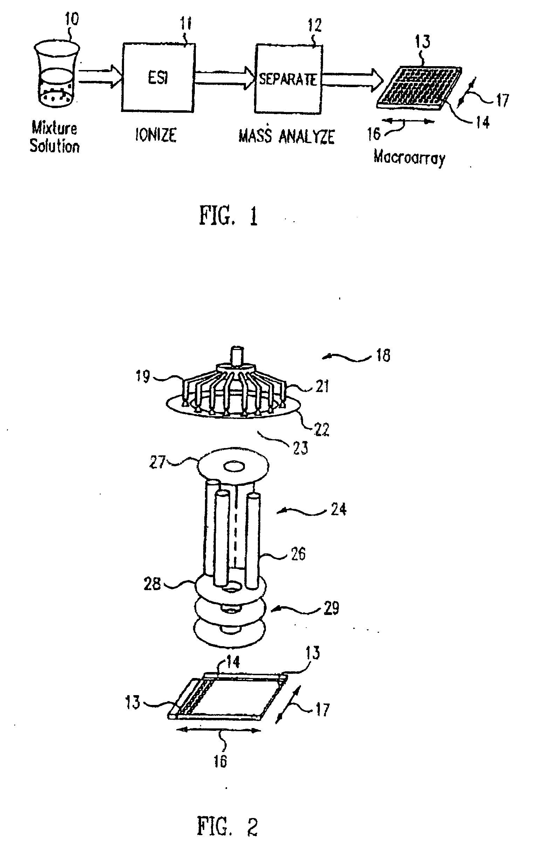

The preparation of microchips with biomolecule arrays is schematically illustrated in FIG. 1. The first step is the ionization 11 of the proteins or biomolecules contained in the sample mixture liquid solution 10 (or in other cases, the solid materials). The molecules can be ionized by electrospray ionization (ESI), matrix-assisted laser desorption ionization (MALDI) or other well known ionization methods. The ions are then separated 12 based on their mass/charge ratio or their mobility or both their mass/charge ratio and mobility. For example, the ions can be accumulated in an ion storage device such as a quadrupole ion trap (Paul trap, including the variants known as the cylindrical ion trap [2] and the linear ion trap [3]) or an ion cyclotron resonance (ICR) trap. Either within this device or using a separate mass analyzer (such as a quadrupole mass filter or magnetic sector or time of flight), the stored ions are separated based on mass/charge ratios. Additional separation might be based on mobility using ion drift devices or the two processes can be integrated. The separated ions are then deposited on a microchip or substrate 13 at individual spots or locations 14 in accordance with their mass/charge ratio or their mobility to form a microarray. To achieve this, the microchip or substrate is moved or scanned in the x-y directions 16 and 17, and stopped at each spot location for a predetermined time to permit the deposit of a sufficient number of biomolecules to form a spot having a predetermined density. Alternatively, the gas phase ions can be directed electronically or magnetically to different spots on the surface of a stationary chip or substrate. The molecules are preferably deposited on the surface with preservation of their structure, that is, they are soft landed, Two facts make it likely that dissociation or denaturation on landing can be avoided. First, large ions are much less likely to dissociate or undergo isomerization (denaturation) than smaller ions because of their lower velocities and greater numbers of degrees of freedom, and, second, prior evidence exists that gentle deposition can be achieved (Feng, B, et ai., J. Am. Chem. Soc. 121 (1999) 8961-8962). Suitable surfaces for soft landing are chemically inert surfaces which can efficiently remove vibrational energy during landing, but which will allow spectroscopic identification. Surfaces which promote neutralization, rehydration or having other special characteristics might also be used for protein soft landing.

As briefly described above, a mass spectrometer can be used to separate the sample ions according to their mass/charge ratio. A system 18 in accordance with the invention is schematically illustrated in FIG. 2. The sample is applied to a multiplexed electrospray ion source 19 [1]. The biomecules leaving the nanospray nozzles 21 are ionized by a voltage applied between the nanospray nozzles and the atmospheric interface 22. The streams 23 of ionized biomolecules are fed into a single high ion capacity linear ion trap 24. The ion trap includes spaced rods 26 and end electrodes 27 and 28. As known, the ion trap can be operated to accumulate ions within the trap and then selectively excite them so they exit the trap in accordance with their mass/charge ratio. A focusing lens assembly 29 focuses the ejected biomolecule ions onto a spot 14 on the microchip 13. The lens assembly can control the ions' velocity and thus the landing energy for soft-landing. As will be presently described in greater detail, other types of mass spectrometers or analyzers can be used to separate and deposit the biomolecule ions onto the microchip. The use of multiplexed ion spray shortens the time required to accumulate a sufficient number of ions to form a spot of desired quality.

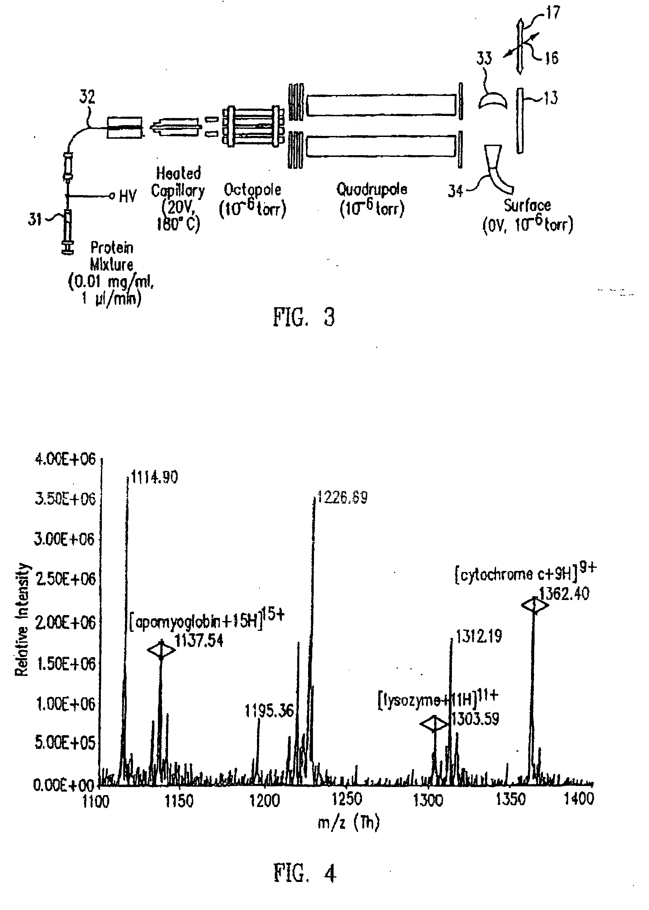

In one example proteins and biomolecules were soft-landed using a linear quadrupole mass filter. A commercial Thermo Finnigan (San Jose, Calif.) SSQ 710C, FIG. 3, was modified by adding an electrospray ionization (ESI) source. The source included a syringe 31 which introduced the protein mixture into the capillary 32. A high voltage (HV) was applied between the capillary 32 and the ionization chamber (not shown) for electrospray ionization. The various chambers (not shown) and elements of the instrument and their pressures are schematically shown and identified in FIG. 3. The microarray plate 13 was mounted for x-y movement in the last evacuated chamber. An x-y microarray plate drive is not shown since its construction is well within the skill of those practicing the art. In one example a flow rate of 0.5 µl/min was used throughout the experiments. The surface for ion landing was located behind the detector assembly. In the ion detection mode, the high voltages on the conversion dynode 33 and the multiplier 34 were turned on and the ions were detected to allow the overall spectral qualities, signal-to-noise ratio and mass resolution over the full mass range to be examined. In the ion-landing mode, the voltages on the conversion dynode and the multiplier were turned off and the ions were allowed to pass through the hole in the detection assembly to reach the gold surface of the plate 13. The surface was grounded and the potential difference between the source and the surface was 0 volts.

To demonstrate preparative separation using mass spectrometry, a mixture of three proteins, cytochrome c. lysozyme, and apomyoglobin, was subjected to electrospray ionization (ESI). Individual ions were isolated using the SSQ-710C (ThermoFinnigan, San Jose, Calif.) mass spectrometer. The pure proteins were collected via ion soft-landing. In each case, the mass selection window was 5 mass/charge units; the unit of mass to charge ratio will be reported using the Thomson (Th) where 1 Th=1 mass unit/unit charge [10]. The landed proteins were re-dissolved by rinsing the surface with a 1:1 methanol:H₂O (v/v) solution. The rinse solutions were examined using an LCQ Classic (ThermoFinnigan, San Jose, CA) mass spectrometer.

Solutions were prepared by mixing 100 µL 0.02 mg/mL cytochrome c (Sigma-Aldrich, St. Louis, Mo.) in 1:1 methanol: H₂O (v/v), 200 µL 0.01 mg/mL lysozyme (Sigma-Aldrich, St. Louis, Mo.) in 1:1 methanol: H₂O (v/v), 200 µL 0.05 mg/mL apomyoglbin (Sigma-Aldrich, St. Louis, Mo.) in H₂O.

A gold substrate (20 mm X 50 mm, International Wafer Service) was used for the ion soft-landing. This substrate consisted of a Si wafer with 5 nm chromium adhesion layer and 200 nm of polycrystalline vapor deposited gold. Before it was used for ion landing, the substrate was cleaned with a mixture of H₂SO₄ and H₂O₂ in a ratio of 2:1, washed thoroughly with deionized water and absolute ethanol, and then dried at 150° C. A Teflon mask, 24 mm X 71 mm with a hole of 8 mm diameter in the center, was used to cover the gold surface so that only a circular area with a diameter of 8 mm on the gold surface was exposed to the ion beam for ion soft-landing of each mass-selected ion beam. The Teflon mask was also cleaned with 1:1 MeOH:H₂O (v/v) and dried at elevated temperature before use. The surface and the mask were fixed on a holder and the exposed surface area was aligned with the center of the ion optical axis.

For each protein, an ion soft-landing period of 90 minutes was used. Between each ion-landing, the instrument was vented, the Teflon mask was moved to expose a fresh surface area, and the surface holder was relocated to align the target area with the ion optical axis, The syringe was reloaded with the protein mixture solution and the ESI conditions were adjusted before ion landing by monitoring the spectral qualities in the detection mode. The voltage applied on the syringe tip varied: 7 kV was used for cytochrome C, 4.9 kV was used for lysozyme, and 5.2 kV was used for apomyoglbin.

FIG. 4 shows the ESI mass spectrum of the mixture of cytochrome c, lysozyme, and apomyoglobin. The ions of +9 charge state of cytochrome c (1360 Th), +11 charge state of lysozyme (1301 Th), and +15 charge state of apomyoglobin (1131 Th) were selected individually for ion soft-landing. A mass isolation window of 5 Th centered at the mass-to-charge ratio of the isolated ion was used. The mass ranges selected on the SSQ 710C (Thermo Finnigan, San Jose, Calif.) for the three proteins were as follows: 1360-1365 Th for cytochrome c; 1300.5-1305.5 Th for lysozyme; and 1135-1140 Th for apomyogoibin.

After soft-landing, the Teflon mask was removed from the surface and the three exposed areas were rinsed with 1:1 methanol/H₂O (v/v) solution. Each area was rinsed twice with 50 µl solution. The rinse solutions were analyzed using a LCQ Classic with loop injection (5 µl). The apomyoglobin solution was acidified before analysis.

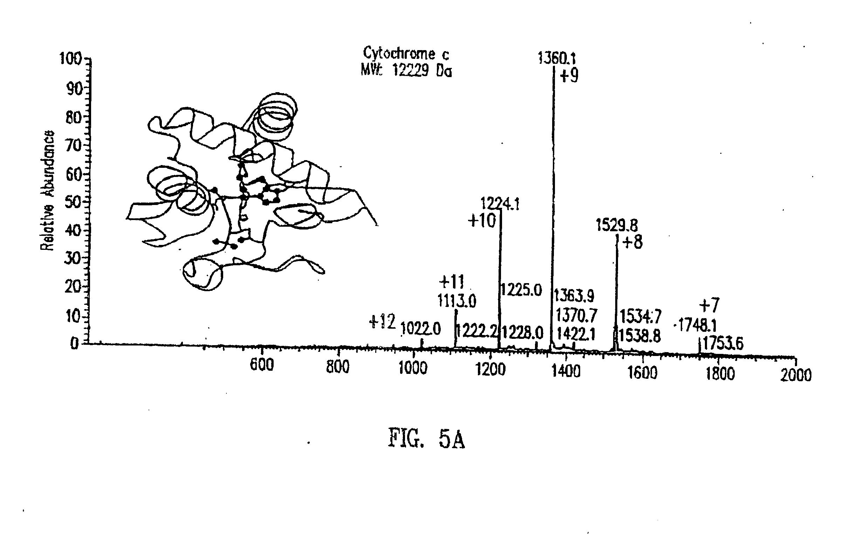

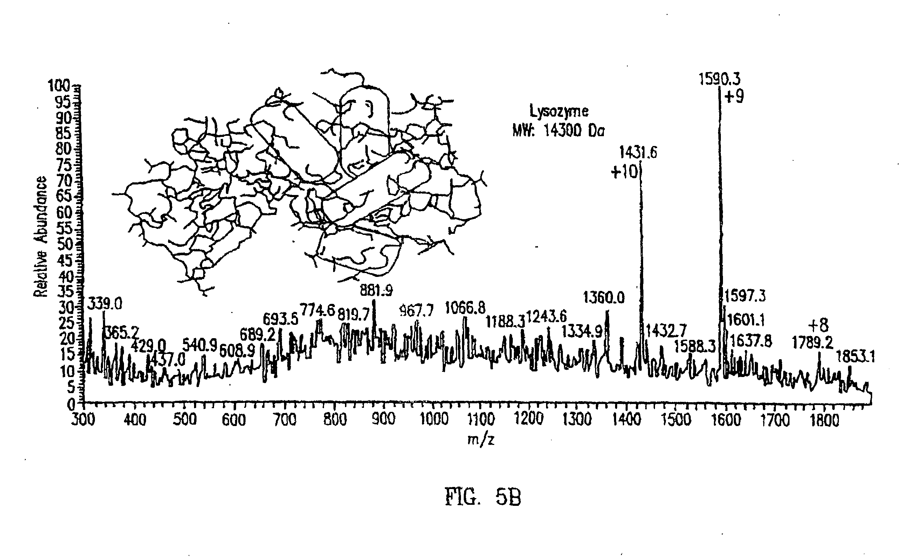

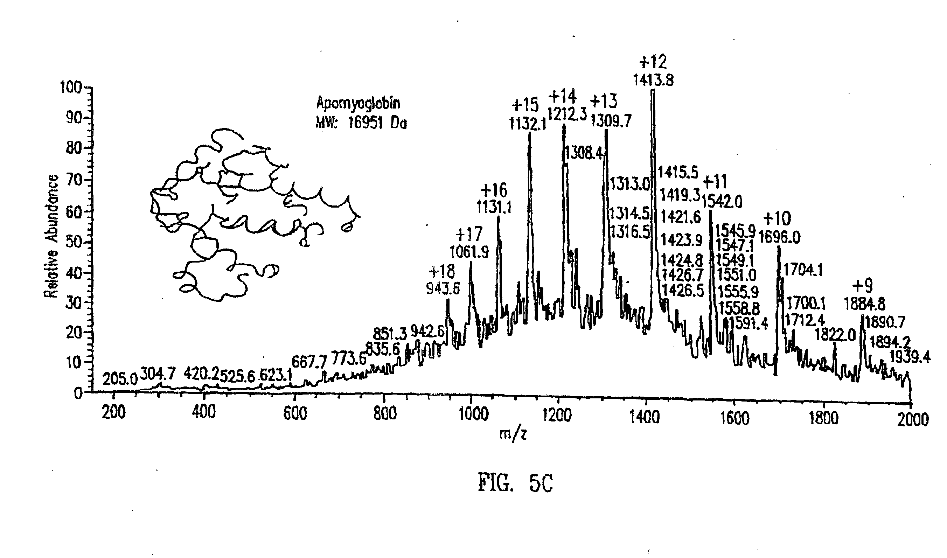

FIG. 5 shows the spectra recorded from the analysis of the rinse solutions. From the solutions obtained by rinsing the surface area exposed to cytochrome c +9, the ions corresponding to cytochrome c charge states of +7 to +12 were observed (FIG. 5a); the ions corresponding to lysozyme charge states +8 to +10 were found in the rinse solutions for the surface area exposed to lysozyme +11 (FIG. 5b); and the ions corresponding to apomyoglobin charge states +9 to +18 were observed in the rinse solutions for the surface area exposed to apomyoglobin +15 (FIG. 5c).

Four conclusions can be drawn from this experiment: 1.Proteins can be collected on surfaces by ion soft-landing using mass-selected ions; 2. Each rinse solution contained only the protein which was selected and landed on the surface, indicating that the ions have been well separated from other ionic or neutral species in the gas phase; 3. Only molecular ions were observed in the rinse solution, which means the ion soft-landing is capable of retaining the intact protein molecular structure; and 4. The fact that the mass spectra show a distribution of charge states, not just the particular state soft-landed, indicates that the protein is neutralized on landing on the surface or after re-solvation.

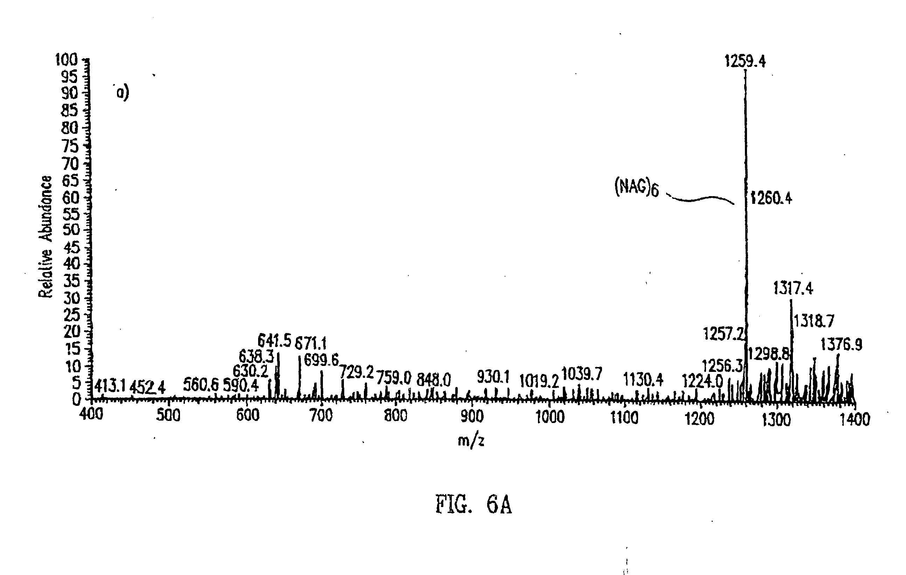

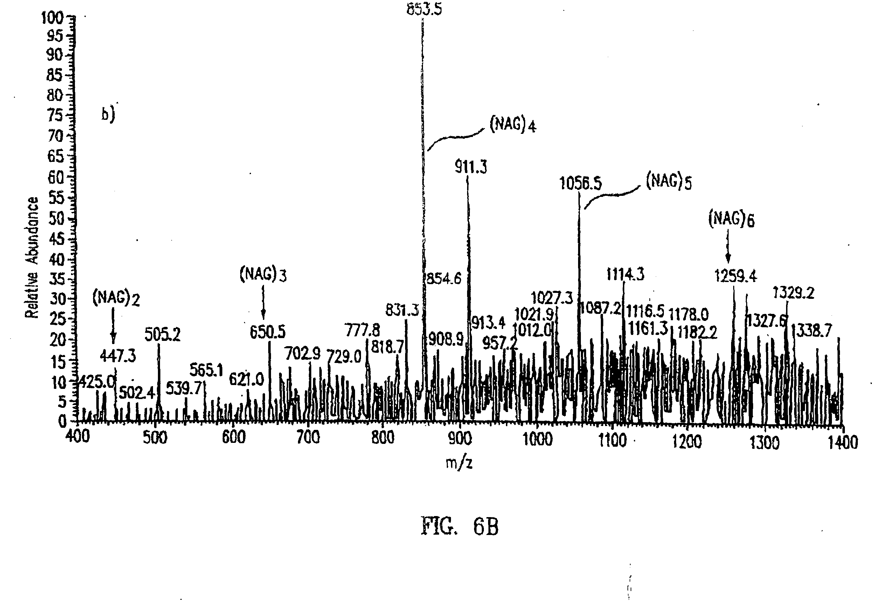

Bioactivity of the landed lysozyme was tested by using hexa-N-actyl chitohexoase as substrate. [Lysozyme+8H]⁸⁺ was landed for 4 hours on a Au target using the same experimental conditions described above. The surface was rinsed using 1 µM hexa-N-acetyl chitohexaose solution containing 2 mM Na+ at a pH of 7.8. The solution was incubated at 38 °C for 2.5 h and was analyzed using the LCQ instrument in the positive ion ESI mode. Spectra of the original solution and the digestion product are shown on FIGS. 6A and 6B.

While the spectrum of the original substrate solution shows only the presence of the hexa-N-acetyl-chitohexaose, the spectrum of the digestion product shows an intense sodiated molecular ion of the tetra-N-acetyl-chitotetraose and other N-acetyl-glucosamine oligomers which are the cleveage products from the enzymatic digestion of substrate. Four conclusions can be drawn from these experiments: 1) The protein ions mass selected by the mass analyzer have been collected through ion soft-landing on the surface; 2) each rinse solution contained only the protein corresponding to the ions selected to land on the surface, which indicates that the ions have been well separated from other ionic or neutral species in the gas phase; 3) only intact molecular ions were observed in the rinse solution, which means the ion soft-landing is capable for retaining the protein molecular structures; and 4) soft-landed lysozyme was able to cleave hexa-N-acetyl-chitohexaose producing tetra-N-acetyl-chitotefraose indicating normal enzymatic activity of this protein.

To provide further experimental evidence that soft-landed proteins retain bioactivity, a mixture of two enzymes, trypsin and lysozyme, were separated in a SSQ-710C (ThermoFinnigan, San Jose, Calif.) mass spectrometer and the pure proteins were collected via ion soft-landing. Two blank samples were generated by landing ions in the mass/charge region from 200 Th to 210 Th, a region that does not contain protein ions. The same instrumental parameters were used as in the case of the experiments described above. A mixture solution was prepared by mixing 200 µL 0.1 mg/mL lysozyme (Sigma-Aldrich, St. Louis, Mo.) in 1:1 MeOH:H₂O (v/v) and 0.01 mg/mL trypsin in 1:1 MeOH:H₂O containing 1% AcOH.

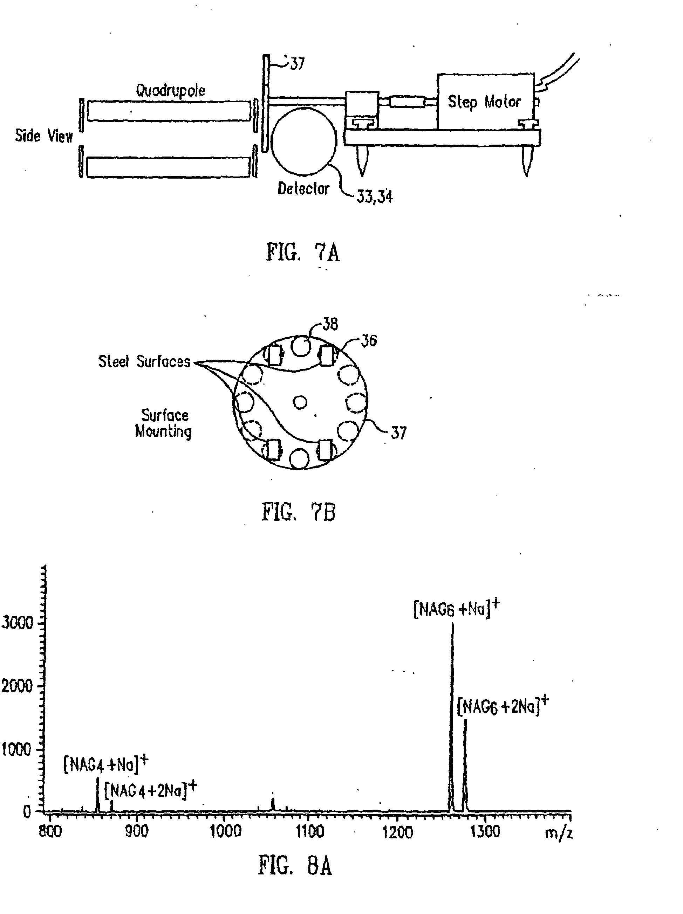

Four 10 mm X 5 mm steel plates 36 were mounted on a rotatable steel disk 37 having openings 38 which was connected to a step motor 39, as it is shown on FIGS. 7A and 7B. The detector 33, 34 was mounted behind the disk and detected ions traveling through the openings 38.

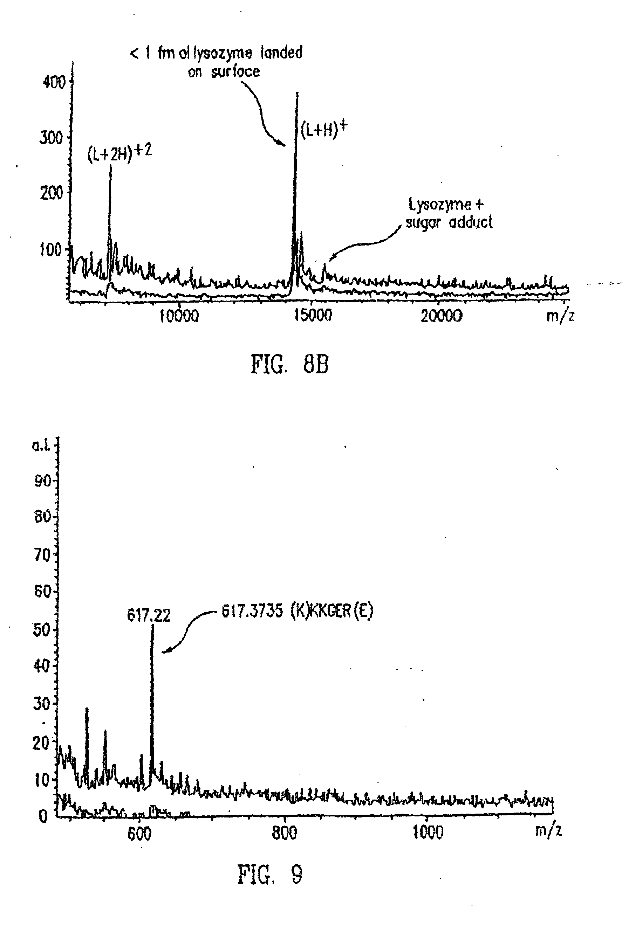

[Lysozyme +8H]⁸⁺, [Trypsin+12H]¹²⁺ ions and two blanks were landed on four separate steel plates by changing the mass window and rotating the disk between the landing sessions. Each session was 3 hours long. The instrument was not vented between depositions. Bioactivity of landed lysozyme was tested by pipetting 10 µL 1 µM hexa-N-acetyl chitohexaose solution containing 2 mM Na⁺ at pH of 7.8 onto the plate carrying landed lysozyme and one of the blank plates. The system was incubated at 37 °C for 4 hours. The evaporated solvent was supplemented continuously. After 4 hours, 2 µL 3% 2,5-dihydroxy benzoic acid in MeOH:H₂O 1:2 was added and the solvent was evaporated to dryness. The plate was transferred into a Bruker Reflex III MALDI-TOF mass spectrometer and MALDI data was collected in the reflectron mode (FIG. 8A) in the low mass range, and in the linear mode in the high mass range. (FIG. 8B) The low-mass MALDI spectra show both the sodiated molecular ion of the substrate and the cleavage product. The high mass MALDI spectrum shows the singly and doubly charged ions of intact enzyme and the enzyme-substrate complex.

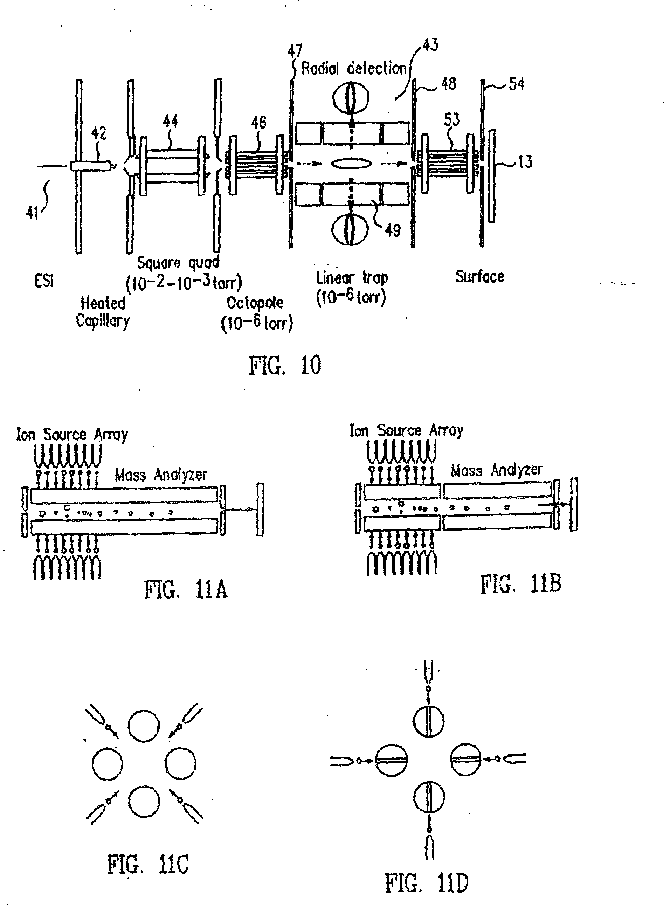

The bioactivity of landed trypsin was tested by pipetting 10 µL 1 µM cytochrome C solution in 10 mM aqueous NH₄CO₃ onto the plate carrying the landed-trypsin and onto the blank. The system was incubated at 37 °C for 4 hours. The evaporated solvent was supplemented continuously. After 4 hours 2 µL saturated alpha-cyano-3-hydroxy-cinnamic acid in ACN:H₂O 1:2 (containing 0.1% TFA) was added and the solvent was evaporated to dryness. The plate was transferred into a Bruker Reflex III MALDI-TOF mass spectrometer and MALDI data was collected in reflectron mode (FIG. 9.). Characteristic tryptic fragments of cytochrome C were detected.

In another embodiment, a linear ion trap can be used as a component of a soft-landing instrument. A Schematic representation of a soft-tanding instrument is presented in FIG. 10. The instrument includes an ion source 41 such as an ESI source at atmospheric pressure. Ions travel through a heated capillary 42 into a second chamber via ion guides 44, 46 in chambers of increasing vacuum (decreasing pressure). The ions are captured in the linear ion trap 43 by applying suitable voltages to the electrodes 47 and 48 and RF and DC voltages to the segments of the ion trap rods 49. The stored ions can be radially ejected for detection. Alternatively, the ion trap can be operated to eject the ions of selected mass through the ion guide 53, through plate 54 onto the microarray plate 13. The plate can be inserted through a mechanical gate valve system, not shown, without venting the entire instrument.

The advantages of the linear quadrupole ion trap over a standard Paul ion trap include increased ion storage capacity and the ability to eject ions both axially and radially. Linear ion traps give unit resolution to at least 2000 Th and have capabilities to isolate ions of a single mass/charge ratio and then perform subsequent excitation and dissociation in order to record a product ion MS/MS spectrum. Mass analysis will be performed using resonant waveform methods. The mass range of the linear trap (2000 Th or 4000 Th but adjustable to 20,000 Th) will allow mass analysis and soft-landing of most biomolecules of interest.

In the soft-landing instrument described above the ions are introduced axially into the mass filter rods or ion trap rods. FIG. 2 illustrates a suitable axial multiplexed electrospray ion source. The ions can also be radially introduced into the linear ion trap.

A multiplexed nano-electrospray ion source with each of the tips feeding radially into a single high ion capacity linear ion trap is illustrated in FIGS. 11A, 11B, 11C and 11D. This arrangement is selected because nanospray ionization is highly efficient, much more so than the higher flow micro-electrospray method. The figures show two possible source/analyzer arrangements. In one, FIG. 11A, the source is simply a part of the linear ion trap analyzer into which ions are injected. In the other, FIG. 11B, the source is a separate device but it is operated using the same RF ion trapping voltage as the analyzer and its DC potential is set so as to provide axial trapping. Two methods of introducing ions are also shown, one (FIG. 11C) involves spraying ions between the electrodes and the other (FIG. 11D) involves cutting slits into the electrodes and spraying ions through the slits.

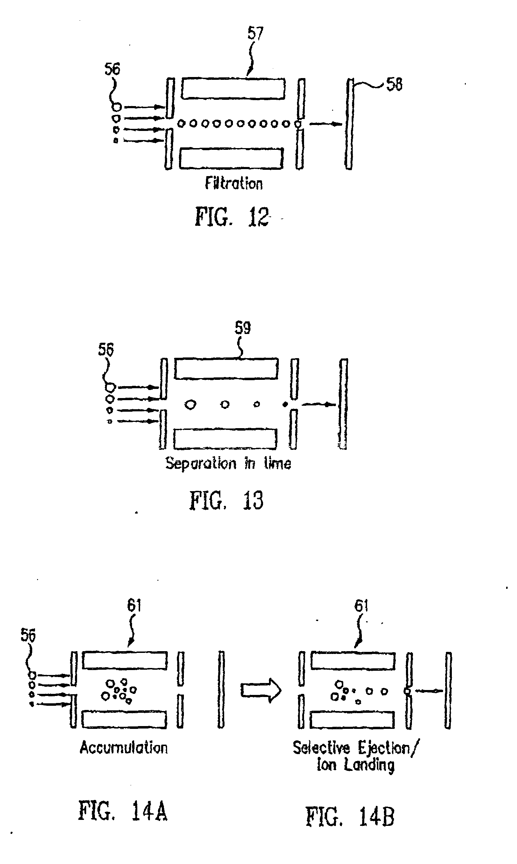

Methods of operating the above described soft-landing instruments and other types of mass analyzers to soft land ions of different masses at different spots on a microarray are now described. Referring to the schematic diagram of FIG. 12 which illustrates the rods of an instrument such as that shown in FIGS. 2 and 3 operated as a mass filter. The ions 56 of the protein mixture are introduced into the mass filter 57. Ions of selected mass-to-charge ratio will be mass-fltered and soft landed on the substrate 58 for a period of time. The mass-filter settings then will be scanned or stepped and corresponding movements in the position of the substrate will allow deposition of the ions at defined positions on the substrate 58.

The ions 56 can be separated in time so that they arrive and land on the surface at different times. While this is being done the substrate is being moved to allow the separated ions to be deposited at different positions. A spinning disk is applicable, especially when the spinning period matches the duty cycle of the device. The applicable devices include the time-of-flight and the linear ion mobility drift tube 59 schematically illustrated in FIG. 13. The ions can also be directed to different spots on a fixed surface by a scanning electric or magnetic fields.

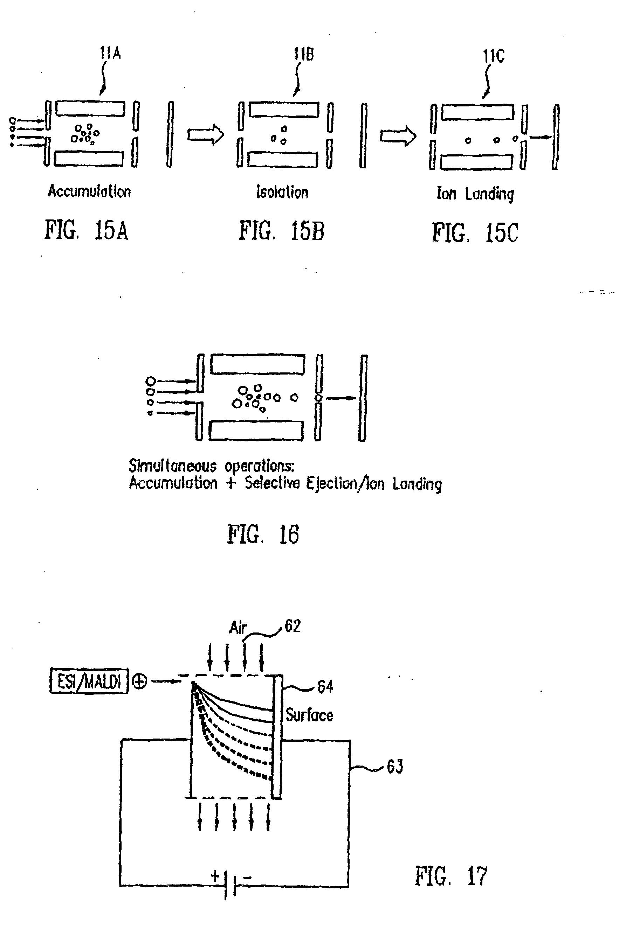

In another embodiment, FIG. 14, the ions 56 can be accumulated and separated using a single device 61 that acts both as an ion storage device and mass analyzer. Applicable devices are ion traps (Paul, cylindrical ion trap, linear trap, or ICR). The ions are accumulated followed by selective ejection of the ions for soft landing, FIGS. 14A and 14B respectively. The ions 56 can be accumulated, isolated as ions of selected mass-to-charge ratio, and then soft landed onto the substrate 58. This is illustrated in FIGS. 15A, 16B and 15C. Ions can be accumulated and landed simultaneously, In another example, FIG. 16, ions of various mass-to-charge ratios are continuously accumulated in the ion trap while at the same time ions of a selected mass-to-charge ratio can be ejected using SWIFT and soft-landed on the substrate 58.

In a further embodiment of the soft-landing instrument, ion mobility is used as an additional (or alternative) separation parameter. As before, ions are generated by a suitable ionization source such as an ESI or MALDI source. The ions are then subjected to pneumatic separation using a transverse gas flow and electric field. A soft-landing instrument is shown in FIG. 17. The ions move through a gas in a direction established by the combined forces of the gas flow 62 and the force applied by the electric field 63. Ions are separated in time and space. The ions with the higher mobility arrive at the surface 64 earlier and those with the lower mobility arrive at the surface later at spaces or locations on the surface.

The instrument can include a combination of the described devices for the separation and soft-landing of ions of different masses at different locations. Two such combinations include ion storage (ion traps) plus separation in time (TOF or ion mobility drift tube) and ion storage (ion traps) plus separation in space (sectors or ion mobility separator).

It is desirable that protein conformation and bio-activity be retained. A combination of strategies may be employed. One is to keep the deposition energy low to avoid dissociation or transformation of the biological ions when they land. This needs to be done while at the same time minimizing the spot size. Two facts make it likely that dissociation on landing can be avoided: first, large ions are much less likely to dissociate or undergo isomerization (e.g. protein denaturation) than smaller ions because of their lower velocities and the greater numbers of degrees of freedom into which energy can be partitioned, and second, prior evidence exists that gentle deposition can be achieved. Another strategy is to mass select and soft land an incompletely desolvated form of the ionized biomolecule. Extensive hydration is not necessary for biomolecules to keep their solution-phase properties in the gas-phase. Hydrated biomolecular ions can be formed by electrospray and separated while still "wet" for soft landing. The substrate surface can be a "wet" surface for protein soft landing; this would include a surface with as little as one monolayer of water. Alternatively, it can be a surface such as dextran in which proteins are stabilized by hydroxyl functional groups. Another strategy is to hydrate the protein immediately after mass-separation and prior to soft landing. Several types of mass spectrometers, including the linear ion trap, allow ion/molecule reactions including hydration reactions. It might be possible to control the number of water molecules of hydration. Still further strategies are to deprotonate the mass-selected ions using ion/molecule or ion/ion reactions after separation but before soft landing to avoid undesired ion/surface reactions or protonate at a sacrificial derivatizing group which is subsequently lost.

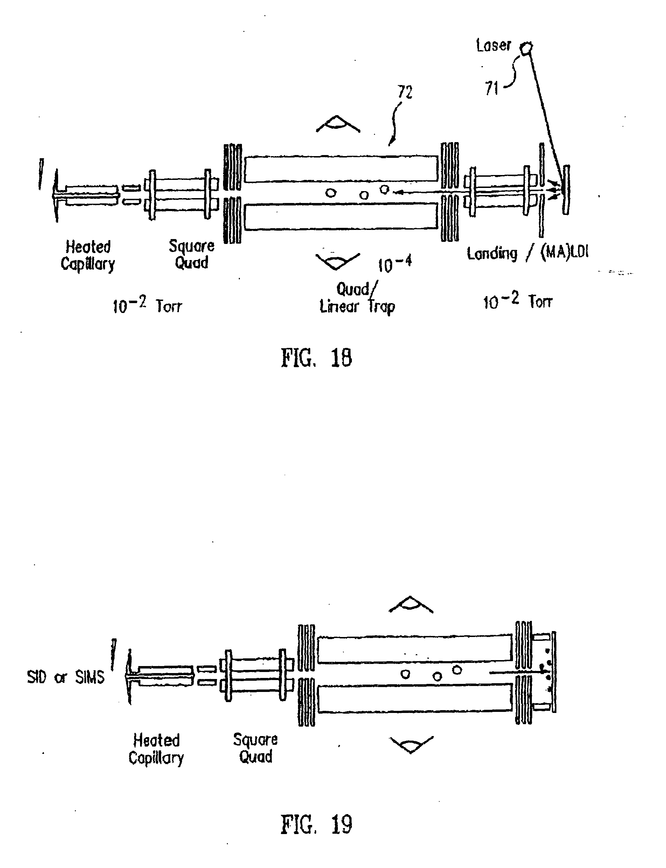

Different surfaces are likely to be more or less well suited to successful soft landing. For example, chemically inert surfaces which can efficiently remove vibrational energy during landing may be suitable. The properties of the surfaces will also determine what types of in situ spectroscopic identification are possible. The protein ions can be soft landed directly onto substrates suitable for MALDI. Similarly, soft landing onto SERS-active surfaces should be possible. In situ MALDI and secondary ion mass spectrometry (SIMS) can be performed by using a bi-directional mass analyzer such as a linear trap as the mass analyzer in the ion deposition step and also in the deposited material analysis step. This is illustrated in FIG. 18 which shows a soft-landing instrument as in FIG. 10. The array of soft-landed proteins on the substrate are excited by laser 71 and directed back into the linear ion trap 72 where they are analyzed. The instrument can be applied to protein SID with little modification, as illustrated in FIG. 19. The proteins/peptides are trapped, isolated, and then ejected to collide onto the surface. After a short delay (as in TOF-surface-TOF instruments), the fragments are injected into the linear trap again for mass analysis.

In summary, in the present system and method, sample molecules in a mixture of proteins or other molecules are ionized, separated in the gas phase as ions of different masses and deposited or soft-landed on a substrate where they are stored for later processing or analysis. They can be separated by their m/z (Th) or their mobility or both and collected as charged or neutral, pure or impure species. During the gas phase separation, the species to be separated can be in the form of molecules or clusters of molecules. The species can be soft-landed or collected as a charged species or neutral species, with or without retention of any prior bioactivity. The separated species can be collected on a surface in an array of discrete spots or in a continuous trace. They can be mobile or immobilized on the surface. The separated species can also be collected in a liquid. Various separation mechanisms, some of which have been described, can be employed. These include filtering (quadruple mass spectrometer, selected ion monitoring mode for other devices), separation in time (TOF, Ion trap, IMS, ICR, etc.) and separation in space (sector, IMS, TOF, etc.). The species can be separated and then collected or collected while it is being separated. The present system and method can also be used to carry out micro scale reactions: soft landing onto a small region and then landing a second species on top or soft landing onto a small region of a chemically active surface or soft landing followed by addition of a reagent to some or all of the collected material in the assay of spots.

This is a unique method that uses mass spectrometry instead of chromatography for preparative-scale separation. It is also an alternative to methods in which arrays are built up synthetically by jet micro-drop or related methods in which reagents are mixed in combinations that allow deposition of specific compounds (typically oligonucleotides) at certain points in the array. Many potentially important applications for the soft-landing instrument should emerge. These include the creation of micro-arrays of proteins (and other compounds) from complex biological mixtures without isolation of pure proteins or even knowledge of their structures. These separated proteins on the array could be interrogated using standard affinity binding and other tests of biological or pharmacological activity.

In general, soft landing offers new ways of interrogating and recognizing biomolecules in pure form with the possibility of storage and later remeasurement of samples. These experiments will lead to highly sensitive detection/identification, e.g. activity assays, using surface-based spectroscopic methods, including Raman spectroscopy. Note that separation by mass spectrometry of proteins from complex mixtures (e.g. serum, plasma) is orthogonal to other separation methods and most likely advantageous when closely related groups of compounds (e.g. glycosylated forms of proteins) are to be separated. The advantages of soft landing extend to minor protein constituents of mixtures, especially when used in conjunction with chromatographic methods like capillary electrochromatography (CEC). It is possible to foresee related-substance analysis on recombinant and post-translationally modified proteins as well as high-throughput experiments, including drug receptor screenings.

Other potential applications include: a. Reactions of extremely pure proteins with affinity and other reagents can be carried out, including enzyme/substrate and receptor/ligand reactions; b. Binding experiments:
ligand/receptor identification, small molecule drug/target pair identification; c. Resolution of multiple modified forms of a protein; d. Effective analysis of biopsy materials; and e. Determination of effects of post-translational modifications on protein function.

Specific areas of application and comments on related methods:

Alternative methods of making protein chips require large amounts of highly purified proteins and are very focused on specific applications. Conventional purification techniques are not efficient. Chips with catalytically active proteins (i.e. kinases) use tagged binding, which is time consuming due to individual expression and purification steps.

Current technology makes the identification of the specific interactions of proteins in a cell with a potential drug time consuming, expensive, and difficult. Soft landing could be used to deposit proteins from a cell individually onto a surface, incubate the surface with a drug candidate, and then analyze the spots to determine which proteins interact with the potential drug.

Soft landing can be used to separate a large number of proteins of very similar mass (e.g. separating glycoforms or insulin from oxidized insulin), which is not allowed by conventional forms of chromatography. As a separation method, soft landing is mass spectrometry based and hence "orthogonal" to chromatographic separations.

Soft landing can be used to make a protein chip array of an entire cell's proteome and examine both low and high abundance proteins in one experiment. Conditions could be manipulated (deposition time) to produce spots of low-cellular abundance proteins from cells which have equal quantities to those of their cellularly abundant analogs (normalization).

Currently cases exist where a protein can be purified to only approximately 90% pure; the question exists as to whether the activity of the 90% purified form is due to the protein itself or contaminants. Soft landing could be used to make extremely pure proteins which could then be tested for activity.

Enzymes might be mass selectively separated and immobilized on a surface in arrays, leaving the active sites accessible. This kind of array could be reused for biological assays.

It might be possible to deliver both the analyte and the reagent to a localized region by soft landing, facilitating ultra-small scale reactions. Examples could include studies of kinases and their substrates, RNA pairing, etc.

There is provided a system and method in which sample molecules in a mixture of proteins or other biochemical molecules are ionized, separated in the gas phase as ions of different masses, and deposited or soft landed on a substrate where they are stored for later processing or analysis. More particularly, the molecules of the biological compounds, including proteins and oligonucleotides are ionized by, for example, electrospray ionization, matrix assisted laser desorption ionization or other ionizing method. The ionized molecules of the mixture are separated by a mass analyzer according to mass, mobility or both, and then soft landed at separate positions on a substrate to form an array. The collected biomolecules at each position can then be identified and analyzed by affinity bonding or other biochemical specific processes and by laser based techniques such as surface enhanced Raman spectroscopy (SERS), fluorescence, or matrix assisted laser desorption/ionization (MALDI) analysis. They might already be known compounds (as a result of analysis by mass spectrometry for example) and could then be used as reagents in subsequent biochemical tests.

It is desirable to separate of proteins and peptides by using glycerol and glycerol-based surfaces as landing substrates and to establish whether biological activity can be maintained. Desorption ionization (DI) based techniques such as liquid secondary ion mass spectrometry (L-SIMS) [22], fast atom bombardment (FAB) [23-25] and matrix-assisted laser desorption ionization (MALDI), provide a set of possible approaches to examination of the soft-landed materials. In early reports on MALDI, Hillenkamp [26] and Tanaka [27] used liquid matrices as means to detect various analytes. While solid organic chromophores are currently more widely used and while imaging mass spectroscopy finds increased acceptance in direct studies of biological tissues [28-30], generally chromophores in the solid state suffer from disadvantages such as highly variable desorption efficiency across the sampled surface, high dependence of the MALDI ion signal on the preparation technique and difficulty in obtaining quantitative results for experiments which require a sustainable stable signal intensity over a long time span. On the other hand, liquid matrices used with MALDI can be made to retain many of the advantages of solid matrices and in addition they also provide a homogeneous sample, consistent ion signal intensity for a large number of shots directed at the same spot, reduced desorption energies and the opportunity to control sample chemistry and so enhance ionization [31, 32]. A less desirable alternative but nevertheless a possibility in the case of DI incompatible surfaces is to analyzing the soft landed materials through the use of electrospray based methods. Unfortunately, analysis of proteins after soft landing into solutions containing high concentrations of glycerol using ESI-MS introduces new problems, mainly in the detection of the landed analytes. The low vapor pressure of glycerol and its high affinity for proteins create interferences with solvent evaporation during electrospray ionization, favoring adduct formation, clustering and supercharging effects [33-35]. On a positive side, most of these disadvantages can be overcome though the use of an ESI variant, such as electrosonic spray ionization (ESSI) [36], and the method can be considered a viable alternative to the desorption/ionization based analysis when instruments capable of L-SIMS or MALDI-TOF are not immediately available to the user.

As discussed previously, there is a need to develop liquid surfaces for ion soft-landing experiments. Favorable and desirable properties of liquids with potential for this type of application are that the liquids be relatively nonvolatile, that they rapidly solvate the arriving gas phase ions, and that they facilitate gentle landing through effective intermolecular energy transfer. The list presented in Table 1 addresses in a concise form the various types of liquid surfaces and some of the challenges involved in implementing soft-landing experiments.

**Table 1**

| **• Bilayer films** | | |
|---|---|---|
| | *o First layer,* in direct contact with the underlying support: | |
| | | ■ Compatible with the soft-landing species |
| | | ■ Can contain substrate or enzyme for further sample processing |
| | | ■ In the case of bioactive components, preserve bioactivity |
| | *o Second layer,* directly exposed to the vacuum | |
| | | ■ Acts as a protective cover for the first layer |
| | | ■ Acts similarly to a membrane and allows transfer of the soft-landed species to the subsequent layer |
| | | ■ Can be separated from the first layer, if necessary for analysis |
| | | ■ Non-miscible |
| | | ■ Vacuum compatible |
| | | ■ Molecularly thin |

| **• "Single" liquid component film** | | |
|---|---|---|
| | | ■ Heterogeneous surface with molecular alignment due to surface tension |
| | | ■ In the case of bioactive components, will preserve bioactivity |
| | | ■ Can contain substrate or enzyme for further sample processing |
| | | ■ Possible dendritic system that captures the soft-landed molecules |
| | | ■ Vacuum compatible |

In particular implementations of the invention, soft-landing of ions on liquid interfaces were conducted with the following materials: Bradykinin, glycerol, lysozyme, p-nitroaniline, 2,5-dinitrobenzoic acid (DHB), 3-aminoquinoline, α-cyano-4-hydroxycinnamic acid (CHCA), sinapic acid (SA), ammonium bicarbonate, hydrogen peroxide, sulfuric acid, 11-mercaptoundecanol and cytochrome c were purchased from Sigma-Aidrich (St. Louis, MO). Fructose and sucrose were purchased from Fisher Scientific (Hanover Park, IL). Trypsin was purchased from Worthington Biochemical Corporation (Lakewood, NJ). Hexa-N-acetylchitohexose was purchased from Seikagaku Corporation (Tokyo, Japan). All HPLC grade solvents such as methanol and water were obtained from Waters Corporation (Milford, MA). All of these chemicals were used without further purification.

In addition, commercially available gold substrates (20 mm x 50 mm, from International Wafer Service) were acquired. Their physical makeup consisted of a Si wafer with 5 nm chromium adhesion layer and 200 nm of polycrystalline vapor deposited gold. Prior to soft landing experiments, the substrate were cut into 2x2 mm² surfaces, cleaned in an acid bath containing 1:4 H₂O₂/H₂SO₄ and then washed thoroughly with deionized water and absolute ethanol.

Liquid surfaces were prepared by dissolving p-nitroaniline, 2,5-dinitrobenzoic acid (DHB), α-cyano-4-hydroxycinnamic acid (CHCA) or sinapic acid (SA) in glycerol, glycerol: fructose (2:1) or glycerol: sucrose (2:1). The amount of DHB, CHCA and SA that could be dissolved in glycerol was increased by using the base 3-aminoquinoline as solubilizing agent [37-39]. The binary or tertiary mixtures formed through matrix solvation in glycerol were further diluted with ethyl alcohol (15:1000 v/v), which acted both as a solvent and as a liquid surface delivery agent and allowed control of the thickness of the final liquid surface on the OH-SAM substrates. Evaporation of volatile solvent from the sample plate was assisted either by a stream of air or by vacuum.

Tests of bioactivity of the enzyme-doped liquid surfaces used a surface composed of L-1-chloro-3-[4-tasylamido]-4-phenyl-2-butanone (TPCK) modified trypsin and glycerol, immobilized on an OH-SAM/Au support. An estimated 1 to 10 ng of bovine cytochrome c was soft-landed over a period of 75 minutes from a solution containing 0.1 mg/ml cytochrome c and 0.01 mg/ml lysozyme. Except where otherwise mentioned, soft-landing was done by mass selecting the ion (M+15H)⁺¹⁵ using a 15 Th window. Upon recovery of the liquid surface into which the cytochrome c had been landed, digestion was initiated by adding 50µl of ammonium bicarbonate (0.01M). The reaction mixture was incubated at constant 37°C overnight in parallel with a blank sample that did not contain any cytochrome c.

In a particular implementation, soft-landing of mass-selected multiply-charged ions was achieved using a single-stage quadrupole model SSQ-710C (ThermoFinnigan, San Jose, CA) or by using a linear ion trap mass spectrometer (SL1.0) [40]. The SSQ instrument 100, as shown in FIG. 20a, was modified to allow a surface 102 to be positioned in a vacuum chamber. The modification consisted of a moving stage that included a rotating disk to which the surface 102 was attached in a pre-determined position. The surface 102 was positioned between a quadrupole ion guide 103 and a detector 104. The rotating disk had an aperture that could be used to allow the ions to pass directly to the detector 104 when necessary. Rotation was controlled using a stepper motor. The functionalized gold surfaces were attached to the disk with conductive copper tape with adhesive on both surfaces. After positioning the 102 surface in the instrument, the SSQ was pumped down and the moving stage was rotated to allow ions to reach the detector.

For the ionization of protein solutions 105, a electrospray ionization (ESI) source 106 was used. A heated capillary 107 and octopole ion guide 108 were positioned between the ionization source 106 and the quadrupole ion guide 103. A voltage of 4 kV was applied on a syringe tip 109 while the flow rate of the solution 105 was set at of 0.3µl/min throughout the experiments. The temperature of the heated capillary 106 was set to about 180°C and the instrument 100 was prepared for acquisition of mass spectra to characterize the protein solution. In this mode, later referred to as the ion detection mode, the high voltages on the conversion dynode and the multiplier were turned on, the ions were detected and overall spectral quality including signal-to-noise ratio and mass resolution over the full mass range (up to 2000 Th), was examined. Next, the rotating disk was positioned so that the surface 102 mounted on the disk was located in-line with the ion beam and at the exit opening of the quadrupole ion guide 103. In this mode, subsequently referred to as the ion-landing mode, the voltages on the conversion dynode and the multiplier were turned off and the ions were allowed to impinge on the surface 102. The voltage on the surface 102 was set to 0V giving a nominal zero as the collision energy used for the landing process. The total ion dose used in each of the soft landing experiments was on the order of 10¹⁰ - 10¹¹ ions as estimated by taking into account the intensity of the mass-selected ion beam at the electron multiplier, the voltages applied on the conversion dynode and the electron multiplier, the corresponding calibration factors for the detection system and the total soft-landing time.

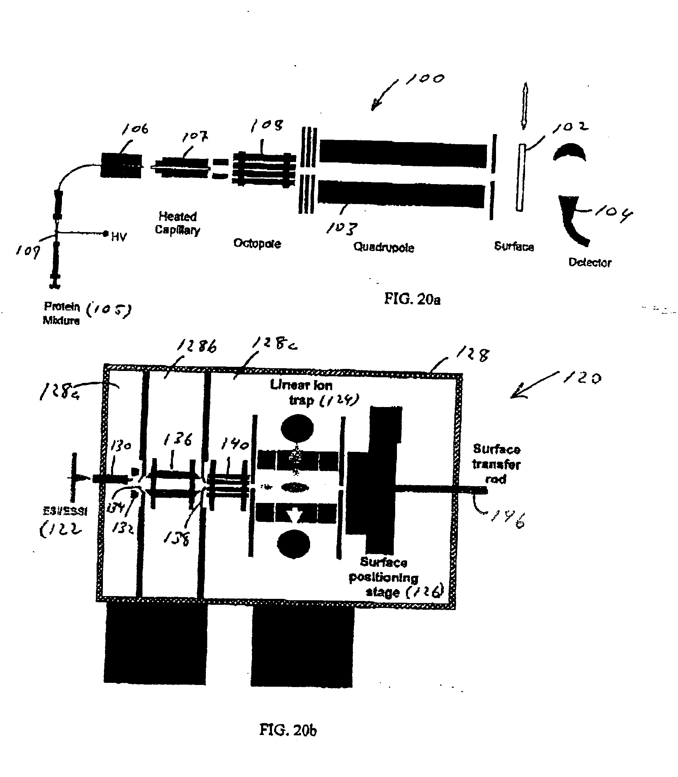

In another implementation, soft-tanding on liquid interfaces was achieved with the linear trap system shown in FIG. 20b. Details of such a system and its operation are described elsewhere [40] and in U.S. Patent Application entitled "System and Method for Preparative Mass Spectrometry," Attorney Docket No. 12264-089, filed herewith, the entire contents of which are incorporated by reference. As an overview, the linear trap system 120 may include any of the features of the invention described above. In certain implementations, the linear trap system 120 includes an atmospheric ionization source 122, and vacuum interface, ion optics, a mass analyzer 124, such as a linear ion trap (LIT), and associated electronics, as well as a surface positioning system 126, all housed in a single vacuum manifold 128. FIG. 20b depicts ions being ejected radially from the trap 124 along the x-axis for detection purposes and that the surface is aligned along the z-axis such that the y-axis comes out of the plane of the figure. In FIG. 20b, the ionization source 122 is an elecrospray ionization (ESI) source and the linear trap system 120 further includes a heated capillary atmospheric interface 130, tube lens 132, a skimmer 134, a square quadrupole ion guide 136, an inter-multipole gate lens 138, and an octopole ion guide 140. A system electronics and components for the linear trap system 120 includes instrument control components, electronic boards/supplies, vacuum components, and surface xy positioning components.

Soft-landing experiments for separation and collection of biological molecules employ a vacuum system and operating conditions that are compatible with the use of liquid surfaces for soft landing while still maintaining a pressure regime that allows optimum performance of the ion optics and mass analyzer.

The main instrument manifold 128 has three regions of differential pumping 128a, 128b. 128c and utilizes a split flow 265 Us turbomolecular pump (Pfeiffer Vacuum Technology, Asslar, Germany) backed by two 30 m³/h rotary vane pumps (BOC Edwards, Crawley, West Sussex, UK). The two rotary vane pumps are connected to both the turbo pump and the atmospheric interface in order to share the total pumping load. A loading chamber can be connected to the main instrument manifold via a gate valve for the purpose of inserting surfaces into the system 120 through a transfer rod 146 without venting the entire system. This loading chamber is evacuated using a 400 Us turbomolecular pump and 16.5 m³/h rotary vane pump (Leybold Vakuum GrnbH, Cologne, Germany). By using a separate vacuum system for the loading chamber, the array preparation time is reduced. This also helps to maintain constant experimental conditions in the mass analysis portion of the instrument.

Various atmospheric ionization methods including ESI, atmospheric pressure chemical ionization (APCI), and electrosonic spray ionization (ESSI) can be implemented. Matrix assisted laser desorption ionization may also be used. The atmospheric interface 130 is based on a heated capillary design which aids in the desolvation of the electrosprayed ions and brings these ions into the first stage of differential pumping. In a particular implementation, the atmospheric interface and optics are adapted from a Finnigan LCQ (Thermo Electron Corp., San Jose, CA). In the first differential pumping region 128a (10⁻³ Torr) ions leave the heated capillary 130 (I = 114 mm; φ = 0.5 mm, where φ is the diameter of the orifice) and pass through the tube lens 132 (length, I = 9 mm; φ = 7.6 mm) followed by the skimmer 134 (φ = 1.0 mm; skimmer alignment with the end of the heated capillary can be adjusted) into the square quadrupole ion guide 136 in the second differential pumping region 128b (10⁻⁴-10⁻³ Torr). This square quadrupole 136 (I = 104 mm; r₀ = 2.86 mm) is followed by the inter-multipole lens 138 (φ = 2.58 mm) in the wall between the second 128b and third 128c differential pumping regions which in turn is followed by the octopole ion guide 140 (1 = 51 mm; r₀ = 2.86 mm). Multiple differential pumping regions coupled with ion guides allow efficient transport of gaseous ions and removal of charged droplets.

In sum, the system 120 includes an ESI ion source 122, a high-capacity LIT 124, wave form capabilities for ion isolation, a radial detector for mass analysis, and facilities for low energy transfer of trapped, mass-selected ions onto specific spots on an electronically movable target. In comparison with the instrument 100, the LIT system 120 provides considerably higher ion flux (on the order of 10⁹ to 10¹⁰ s⁻¹), the opportunity to check the spectrum of the material to be landed by in situ mass analysis, and more control over the landing energy. The system 120 is also equipped with an automated moving stage 126 on which various targets can be positioned and protein arrays can be generated.

Soft-landed material was analyzed by using ESI-MS or ESSI-MS [36] on an LCQ Classic (ThermoFinnigan) or by using MALDI-MS on a Bruker Reflex III MALDI-TOF instrument. Except where otherwise stated, the surface recovered after soft-landing was used "as is", without additional sample processing. The MALDI-TOF was equipped with a nitrogen laser (337nm) and operated at an acceleration voltage of 25kV. The laser data was collected in reflectron mode in the low mass range, and in the linear mode for the high mass range. A MALDI mass spectrum consisted of the average ion signal acquired from 100 to 200 shots, with good shot-to-shot reproducibility due to the lack of inhomogeneity in the matrix-containing liquid surface. In the case of analysis by ESI-MS, the proteins or peptides separated by ion soft-landing were recovered along with the liquid surface and substrate by washing the gold support with 50 µl of a solution of 50:49:1 methanol: water: TFA (v/v/v).

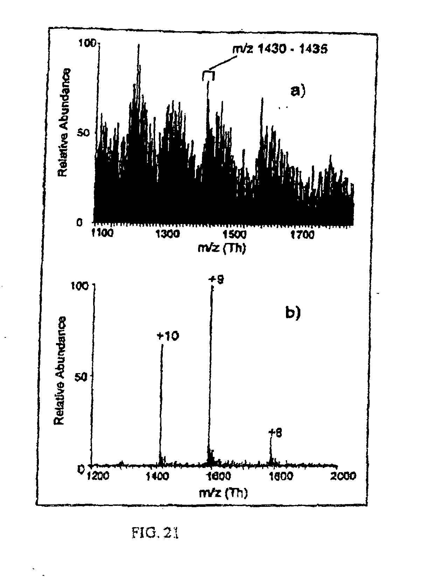

A typical result from an experiment that investigates the purification of a sample by ion soft-landing into a liquid surface is shown in FIG. 21. In this experiment, lysozyme from an oxidized and partially decomposed sample was ionized using conventional ESI and, based on a preliminary mass spectral analysis FIG. 21a, ions corresponding to the +10 charge state (1430-1435 Th) were isolated using the modified SSQ instrument and collected into a glycerol/sucrose liquid matrix. Subsequent cleanup of the solution was necessary to remove the glycerol matrix which interferes with ESI analysis by producing a supercharging effect. The simplest method of matrix removal consisted of carrying out a solvent exchange using 3kDa ultrafilter membranes and ammonium acetate buffer (pH=7.0). Results for mass spectrometric analysis performed on the liquid after soft landing are shown in FIG. 21b. The landed material was separated from the matrix by ultrafiltration and it shows an ESI mass spectrum that displays the lysozyme charge states +10, +9 and +8 consistent with neutralization on landing. In particular, the soft landed material along with the liquid surface were rinsed using 1 mL methanol/water 1:1 and the rinse liquid was concentrated through ultrafiltration using a Microcon YM-3 centrifugal filter unit. The concentrate was diluted with methanol/water 1:1 10-fold, and when analyzed using the LCQ instrument under similar conditions to those used for obtaining the preliminary information about the impure sample, it produced the spectrum of pure lysozyme shown in FIG. 21b. The nature of the impurities in the original sample was not identified. The results indicate that it is possible to soft-land pure proteins into a glycerol containing liquid surface starting with a complex protein mixture.

A desirable characteristics of the soft-landing process is the ability to maintain the bioactivity of the proteins that are being separated. To test the hypothesis that enzymes can still perform their functions, even though they are removed from their aqueous environment, ionized and exposed to vacuum, lysozyme was utilized as a benchmark protein for bioactivity maintenance purposes.

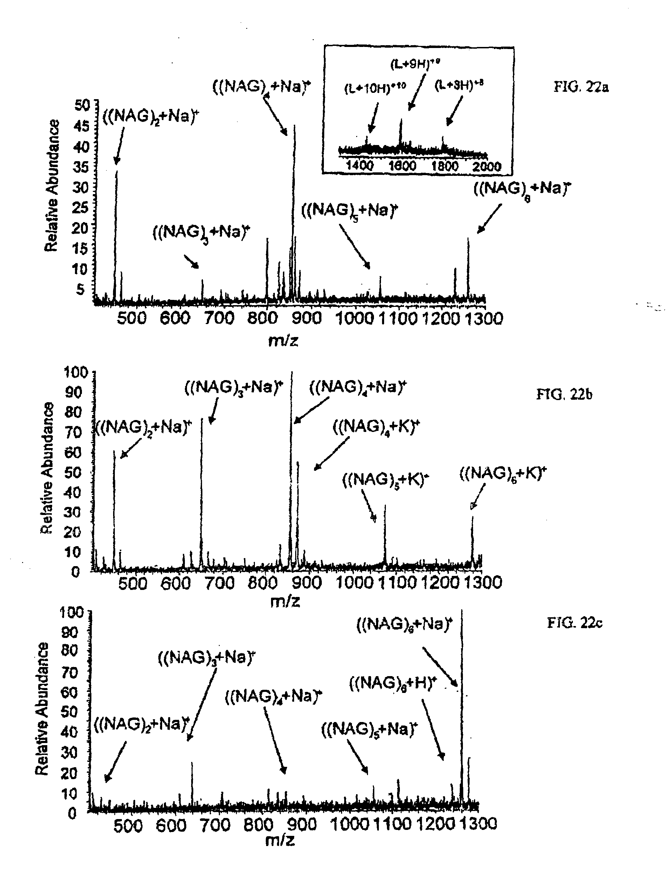

FIGs. 22a-22b show a comparison of N-acetylglucosamine hexamer hydrolysis under enzymatic and non-enzymatic conditions. FIG. 22a illustrates an ESI-MS spectrum of an solution containing soft-landing lysozyme (M+8H)⁺⁸ into a glycerol/fructose/hexa-N-acetylchitohexose liquid surface. The landed material along with the supporting substrate was recovered with a buffered solution, incubated, diluted with methanol and injecting into an LCQ Classic. The ESI mass spectrum displays the sodiated N-acetylglucosamine hexamer (NAG)₆ as well as the sodiated N-acetylglucosamine pentamer (NAG)₅, tetramer (NAG)₄, trimer (NAG)₃ and dimmer (NAG)₂ resulted from lysozyme bioactivity. Soft-landed lysozyme (L) was also observed (insert of FIG. 22a). FIG. 22b shows a ESI-MS spectrum corresponding to hydrolysis of NAG₆ by solution phase lysozyme (Blank 1), and FIG. 22c shows a ESI-MS spectrum corresponding to NAG₆ stored overnight at the same temperature, pH and in the same reaction medium as the one shown in FIGs. 22a and 22b except that no lysozyme was present.

More particularly, the protein was soft-landed into a liquid surface containing glycerol (with fructose added to increases its viscosity and decrease its vapor pressure) and hexa-N-acetylchitohexaose, a molecule composed of 6 N-acetylglucosamine units which is a found in the cell walls and is common target for lysozyme. [Lysozyrne+8H]⁸⁺ was landed for 1 hour into the liquid target. Upon recovery of the liquid surface, the enzymatic reaction was triggered by addition of NaHCO₃ buffer, adjusted to a final pH of 6.5-7.5. The solution was incubated at 38°C and the reaction was allowed to proceed overnight. Upon dilution of the digestion medium and analysis by ESI-MS, the spectrum shown in FIG. 22a was obtained. Through close inspection one notices that the main digestion products, N-acetylglucosamine pentamer, tetramer, trimer and dimer expected upon reaction of lysozyme with hexa-N-acetylchitohexose are present in the reaction mixture along with the traces of soft-landed lysozyme. To further substantiate the findings, two additional samples were run in parallel with the incubation of the soft-landed lysozyme. Those two samples contained in one case a control with identical composition as in the above reaction except that lysozyme was added from a standard solution rather than being deposited through soft-landing (FIG. 22b). In the other blank, lysozyme was completely excluded from the reaction mixture so that we could study the effects of N-acetylglucosamine hexamer hydrolysis in a non-enzymatic assay. Overall, a distinct difference between the self-hydrolysis of NAG₆ (FIG. 22c) and hydrolysis of NAG₆ by soft-landed lysozyme (FIG. 22a) was observed. Moreover it was confirmed that the fragments corresponding to the digested sugar were due to the enzymatic activity of soft-landed lysozyme because the same fragment was observed when solution phase lysozyme was added to a NAG₆ liquid surface containing medium and allowed to react overnight (FIG. 22b). A higher incidence of Na⁺ and K⁺ adducts in the case of solution phase lysozyme digestion (FIG. 22b) is attributed to the impurities present in the commercial lysozyme samples, impurities which can be eliminated through soft-landing purification.

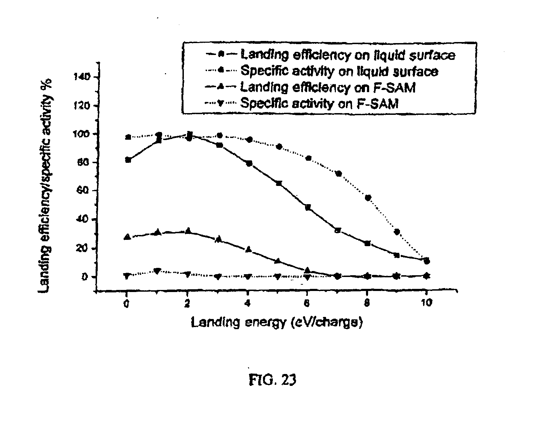

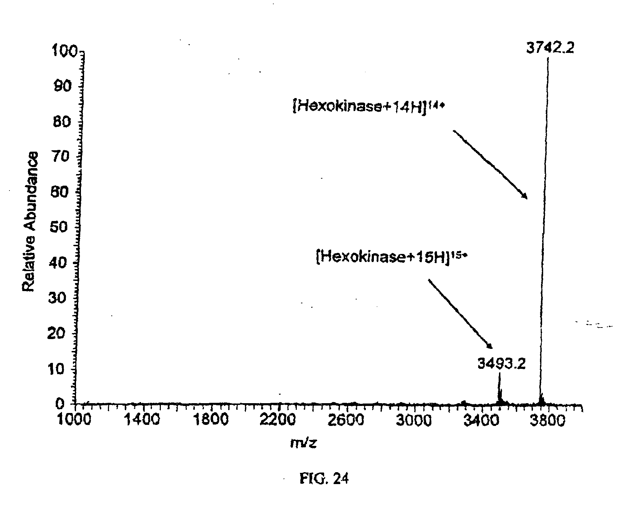

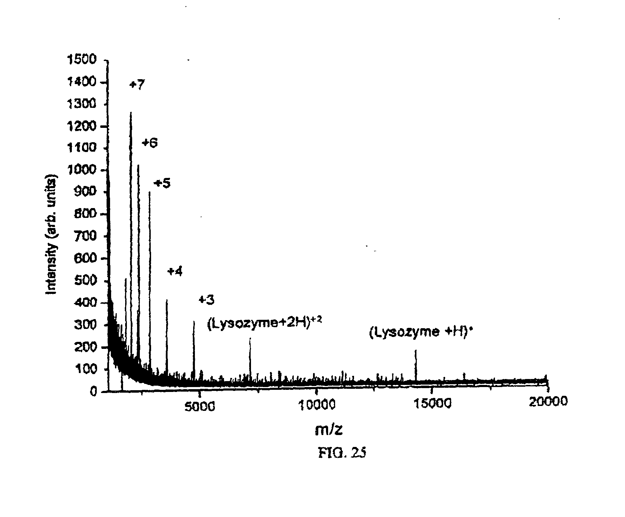

Mass spectrometric analysis of soft-landed materials in a glycerol-based liquid is not straightforward, since such materials are not compatible with either MALDI or ESI-MS. However, variants of ESI exist which are compatible with high glycerol concentrations. Systematic studies on hexokinase soft landing (FIG. 23) employed such a variant, electrosonic spray ionization (ESSI) [36]. The analytical performance of ESSI, including sample consumption and sensitivity, is more comparable to the widely used nanospray ionization technique than to conventional ESI. The most distinctive features of ESSI are the production of narrow peaks (little or no solvation or other adduct formation) and the extremely narrow charge-state distribution as exemplified by a spectrum of hexokinase shown in FIG. 24. The method tends to provide ions of proteins and protein complexes in their native conformation rather than their denatured states. Comparisons were made between the soft-landing efficiency and the specific bioactivity of yeast hexokinase as a function of soft landing energy using fluorinated self-assembled monolayer and glycerol/fructose 3:2 surfaces (FIG. 23). The optimal landing efficiency, defined as recovered material/number of ions sent to the surface, was observed to be between 1 and 5 eV/charge in both cases. The reasons for the decrease in efficiency at lower or higher kinetic energies is not known but can reasonably be associated with the broad kinetic energy distribution of the ions, insufficient focusing, increasingly likelihood of simple scattering at low energy and subsequent surface induced conformation distortions at higher energies [41]. Note that the pressure in the linear ion trap instrument is ~1 mtorr and that the distance from the center of the trap to the surface is an order of magnitude greater than the mean free path for hexokinase ions. The data clearly show that both the landing efficiency and the specific activity of the soft-landed protein are considerably higher in the case of the liquid and the solid self-assembled monolayer surface. The difference in both landing efficiency and residual bioactivity can be explained by looking at the possible events encountered by ions throughout the landing process. In the case of fluorinated F-SAM surfaces, the ions impact the surface at the lab-frame kinetic energy [42]. Upon impact, due to the hydrophobicity of the self-assembled monolayer, the ions most likely unfold and change their orientation. However, since most likely the protein ions do not unfold completely, some of the charges still can remain isolated from the surface causing charge build-up. Hence, subsequent protein ions experience a net charge on the surface and an insulating layer of proteins which are probably responsible for the observed low soft-landing efficiency. In the case of the liquid surface, the protein ions undergo series of low energy collisions with evaporated glycerol molecules. On the time-frame of the experiment, the glycerol evaporates at a fairly constant rate as shown in FIG. 23. The neutralization is promoted by the solvent, so it does not necessarily involve significant conformational changes. If some of the charge sites are still isolated and there are not enough acidic groups to form anionic residues (zwitterions), the solvent molecules are still able to form counter ions to yield a neutral surface. Furthermore, beyond these advantageous features, glycerol is well known to stabilize folded protein structures. In this way, the lower landing efficiency at low landing energy can be associated with (besides the factors already mentioned) surface charging in the case of F-SAM and with the inelastic ion-molecule collisions in the case of the liquid surface. The assumed incomplete neutralization on F-SAM surface implies that the landed ions can be desorbed from a positively-charged surface without any need for a supplementary matrix with a strong absorption band in the UV. In agreement with this expectation, laser desorption spectra of soft-landed lysozyme on an F-SAM surface shows multiply-charged ions corresponding to several protonated charge states of the landed species (FIG. 25). Note that all the observed ions have lower charge states than the mass-selected soft landed ion itself, providing evidence for partial neutralization occurring on the surface. SIMS interrogation of F-SAM surfaces carrying soft-landed doubly-protonated bradykinin has yielded doubly-charged ions of the peptide [43]. These observations are in agreement with the results of early soft-landing experiments [5] and extend the previously observed phenomenon on ionic deposition on a surface to macromolecular systems. This result should allow further exploration into the preparation of surfaces with unusual electronic and biological properties.

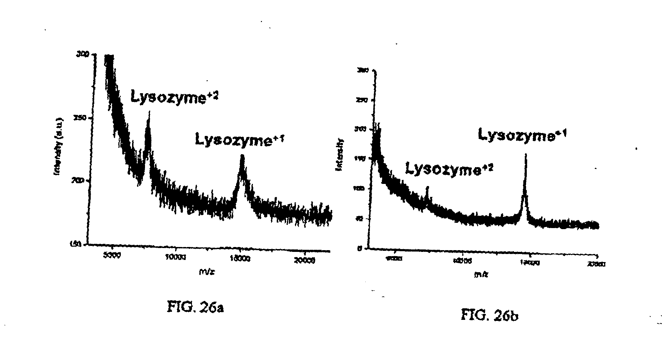

In contrast to spray based analysis of soft-landed materials, which inherently involves dissolution of the surface, MALDI offers a type of analysis which can be carried out in principle without any further modification of the surface. Glycerol and carbohydrates themselves are not good matrices for W-MALDI applications; however, by addition of various UV absorbing chromophores (including traditional MALDI matrices) good liquid MALDI matrices can be obtained and soft-landing can be performed directly into this matrix. Soft-landing followed by MALDI detection using α-cyano-4-hydroxycinnamic acid and p-nitroaniline doped glycerol surfaces gave the results shown in FIGs. 26a and 26b.

FIG. 26a shows a UV-MALDI mass spectrum of a surface containing soft-landed [lysozyme+9H]⁹⁺ into glycerol/fructose/p-nitroaniline/water liquid mixture. No additional sample processing was necessary between soft-landing and MALDI analysis. The p-nitroaniline dissolved in the liquid surface functioned as a UV-MALDI matrix for analysis purposes.

FIG. 26b shows a UV-MALDI mass spectrum after soft landing [lysozyme+9H]⁹⁺ into a α-cyano-4-hydroxycinnamic acid:3-aminoquinoline:glycerol liquid mixture. No additional sample processing was performed between soft-landing and MALDI analysis. The α-cyano-4-hydroxycinnamic acid dissolved in the liquid surface functioned as a UV-MALDI matrix for analysis purposes.

In these experiments the surface carrying the liquid matrix and the soft-landed material was directly transferred from the soft-landing instrument to the MALDI-TOF and the sample was interrogated using MALDI without any prior modification. The detected peaks are considerably broader than in the case of solid matrices, which is in agreement with the findings of previous studies [44]. In contrast to the undesired peak broadening, liquid matrices show a number of desirable features including good shot-to shot spectral reproducibility and at least two orders of magnitude dynamic range, features which should allow quantification of the landed material using external calibration. The good spectral reproducibility can be associated with the homogenous distribution of constituents and analytes in the liquid matrix and the highly reproducible incident angle of the laser, features that cannot be achieved using microcrystalline solid matrix. One of the most important implications of these experiments is the opportunity for performing soft-landing and analysis in the same device, without removing the soft-landed material from the vacuum, viz. the possibility of doing in-situ analysis after ion soft landing. Although the quadrupole analyzer is not compatible with MALDI ionization, since these analyzers only work with continuous ion sources, the alternatively used linear trap device (*vide supra*) will be combined with a MALDI source in such a way the soft-landed material can be re-ionized and sent back to the linear ion trap. Since the sample consumption of MALDI analysis is negligible compared to the overall amount of analyte, this method might be used continuous throughout the soft-landing experiment to follow the progress of the experiment.

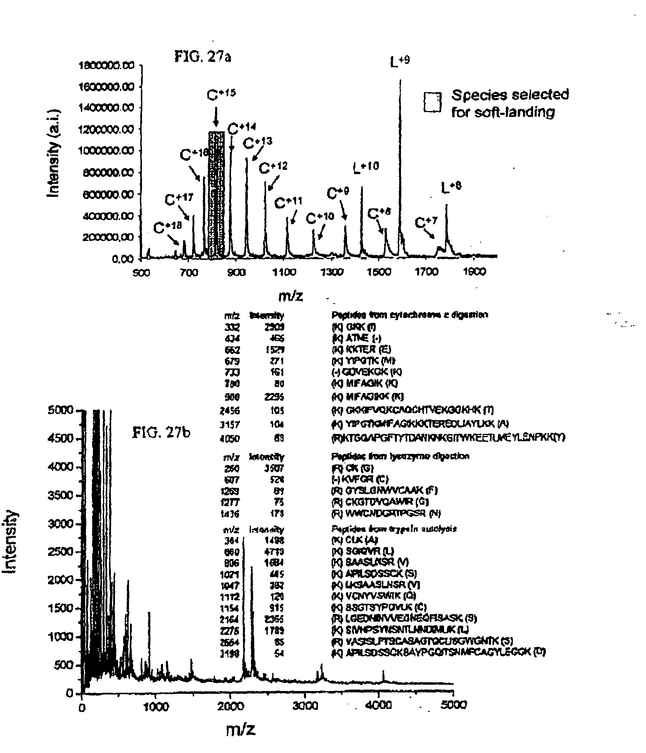

Liquid surfaces provide the capability of not only accumulating mass-selected ions on a surface but testing them *in-situ* via specific chemical reactions. Aliquots of liquid surface material can be tested with a wide variety of reactants which undergo chemical reactions with the landed material giving more specific information about the landed species. A special case of this type of application is when an active enzyme is dissolved in the liquid surface, and the landed substrate undergoes enzymatic modification. As a demonstration, cytochrome c ions were landed on a liquid surface which contained active trypsin dissolved in a glycerol/fructose/water mixture. The cytochrome c solution used for soft-landing contained lysozyme in equal amounts as an internal standard. After soft-landing, the surface material was diluted, incubated and α-cyano-4-hydroxycinnamic acid was added as a matrix compound prior to MALDI analysis. Note, that from our experience all the tested MALDI matrices are strong inhibitors of trypsin at appropriately high concentrations (typical ratios of 1:1000 sample:matrix), concentrations which are necessary to achieve a good signal resolution during the desorption/ionization analysis; hence the matrix has to be added after soft-landing. After digestion, the resulting mass spectrum FIGs. 27a and 27b show 10 different tryptic fragments of cytochrome c, which corresponds to a calculated sequence coverage of 82 %. In particular, FIG. 27a shows a ESI-MS spectrum of the lysozyme/cytochrome c binary mixture used for the soft-landing experiment, and FIG. 27b shows a UV-MALDI-MS spectrum after cytochrome c digestion in an enzymatically active liquid surface containing trypsin. The peaks identified in the insert are characteristic to peptides resulting from tryptic digestion of soft-landed cytochrome c in a glycerol environment as well as to peptides resulting from trypsin autolysis and lysozyme digestion.

Besides cytochrome c fragments, autolysis products of trypsin, various glycerol or fructose adducts and a few lysozyme fragments (corresponding to less than 5 % of the overall intensity) were also observed. The peptide m/z values were entered into MS-FIT [45], a popular peptide database which performed theoretical digestions on a large subset of proteins contained in the *Swiss-Prot* database. Among the top possible proteins which contained all the listed peptides, cytochrome c *Bos Taurus* had the highest score as shown in Table 2.

**Table 2 Peptides from tryptic digestion of soft-landed cytochrome c to identify soft-landed material**

| MOWSE Score | #21(%) Masses Matched | % Cov | % TIC | Mean Err ppm | Data Tol ppm | MS Digest index * | Protein MW | (Da)/pl | Accession * | Species | Protein Name |
|---|---|---|---|---|---|---|---|---|---|---|---|
| 1 | 10210 | 27(100) | 100 | 100 | 0.00376 | 0.0083 | 174264 | 11522/9.5 | P00000 | BOVIN | Cytochrome c |
| 2 | 3637 | 15 (71) | 83 | 71.4 | 0.00054 | 0.0522 | 137 | 11486/9.6 | P00012 | MIRLE | Cytochrome c |
| 3 | 3852 | 15 (71) | 83 | 71.4 | 0.00054 | 0.0522 | 126063 | 11501/9.8 | P00011 | CANFA | Cytochrome c |
| 4 | 735 | 14 (66) | 74 | 66.7 | 0.00639 | 0.05 | 134483 | 11516/9.6 | P00010 | ESCGI | Cytochrome c |
| 5 | 734 | 14(58) | 74 | 88.7 | 0.00639 | 0.05 | 64177 | 11530/9.5 | P0007 | HIPAM | Cytochrome c |
| 6 | 301 | 11(52) | 58 | 52.4 | 0.0054 | 0.0638 | 11899 | 11476/9.5 | P00022 | CHESE | Cytochrome c |
| 7 | 300 | 11 (52) | 58 | 52.4 | 0.0054 | 0,0538 | 20051 | 11493/9.5 | P81280 | ALLMI | Cytochrome c |
| 8 | 168 | 12(57) | 81 | 57.1 | 0,00907 | 0.0531 | 54785 | 11660/9.5 | P00008 | RABIT | Cytochrome c |
| 9 | 16.5 | 10(47) | 66 | 47.6 | 3.93 | 24.8 | 43211 | 11456/9.8 | P00023 | CROAT | Cytochrome c |
| | | | | | | | | | | | |

| | | | | | | | | | | | |
|---|---|---|---|---|---|---|---|---|---|---|---|
| * MS-FIT results from a computerized search, using the peptides observed in the tryptic digestion of soft-landed cytochrome c as input parameters, correctly identify the soft-landed material; Cytochrome c (*Bos taurus*) | | | | | | | | | | | |

Using this method, a native mixture of unknown proteins can be separated by ion soft-landing and deposited into an array of enzymatically active liquids, at predetermined positions. Upon digestion and MALDI analysis of each individual spot and with the use of a search algorithm such as MS-FIT, the unknown proteins could be identified.

References:

(1) Liu, H.; Felten, C,; Xue, Q.; Zhang, B.; Jedrzejewski, P.; Karger, B. L.; Foret, F., Anal. Chem, 2060, 72, 3303-3310.

(2) Wells, J. M.; Badman, E. R.; Cooks, R. G., Anal. Chem., 1998, 70, 438-444.

(3) Schwartz, J. C.; Senko, M. W.; Syka, J. E. P., J. Am. Soc. Mass Spectrom, 2002, 13, 659-669.

(4), Franchetti, V.; Solka, B. H.; Baltinger, W. E.; Amy, J. W.; Cooks, R. G., Int J. Mass Spectrom, Ion Phys., 1977, 23, 29-35.

(5) Miller, S. A.; Luo, H.; Pachuta, S.; Cooks, R. G., Science, 1997, 275, 1447.

(6) Luo, H.; Miller, S. A.; Cooks, R. G.; Panchuta, S., J. int. J. of Mass Spectrom, Ion Processes, 1998, 174, 193-297.

(7) Geiger, R. J.; Melnyk, M. C.; Busch, K. L.; Bartlett, M. G., int. J. of Mass Spectrom, 1999, 182/183, 415-422.

(8) Feng, B.; Wunschel, D. S.; Masselon, C. D.; Pasa-Tolic, L.; Smith, R. D., J. Am. Chem. Soc., 1999, 121, 8961-8962.

(9) Bromann, K; Felix, C.; Brune, H.; Harbich, W.; Monot, R.; Buffet, J., Kern, K., Science, 1996, 274, 956-958.

(10) Cooks, R. G.; Rockwood, A. L., Rapid Commun. Mass Spectrom, 1991, 5, 93-93.

(11) Siuzdak, G., Bothner, B., Yeager, M., Brugidou, C., Fauquet, C., Hoey, K., Chang, C., Chemistry and Biology, 1996, 3, 45-48.

(12) Tsekouras, A. A.; Iedema, M. J.; Cowin, J. P. Amorphous water-ice relaxations measured with soft-landed ions. Physical Review Letters 1998, 80, 5798-5801.

(13) Tsekouras, A. A.; Iedema, M. J.; Ellison, G. B.; Cowin, J. P. Soft-landed ions: a route to ionic solution studies. International Journal of Mass Spectrometry 1998, 174, 219-230.

(14) Kitching, K. J.; Lee, H. N.; Elam, W. T.; Johnston, E. E.; MacGregor, H.; Miller, R. J.; Turecek, F.; Ratner, B. D. Development of an electrospray approach to deposit complex molecules on plasma modified surfaces. Review of Scientific Instruments 2003, 74, 4832-4839.

(15) Fuerstenau, S. D.; Benner, W. H.; Thomas, J. J.; Brugidou, C.: Bothner, B.; Siuzdak, G. Mass spectrometry of an intact virus. Angewandte Chemie-International Edition 2001, 40, 542-544.

(16) Trauger, S. A.; Junker, T.; Siuzdak, G. Investigating viral proteins and intact viruses with mass spectrometry. Modern Mass Spectrometry 2003, 225, 265-282.

(17) Fenselau, C.; Demirev, P. A. Characterization of intact microorganisms by MALDI mass spectrometry. Mass Spectrometry Reviews 2001, 20, 157-171.

(18) Ouyang, Z.; Takats, Z.; Blake, T. A.; Gologan, B.; Guymon, A. J.; Wiseman, J. M.; Oliver, J. C.; Davisson, V. J.; Cooks, R. G. Preparing protein microarrays by soft-landing of mass-selected ions. Science 2003, 301, 1351-1354.

(19) Back, J. F.; Oakenfull, D.; Smith, M. B. Increased Thernal-Stability of Proteins in the Presence of Sugars and Polyols, Biochemistry 1979, 18, 5191-5196.

(20) Lakshmi, T. S.; Nandi, P. K. Effects of Sugar Solutions on Activity-Coefficients of Aromatic Amino-Acids and Their N-Acetyl Ethyl-Esters. Journal of Physical Chemistry 1976, 80, 429-452.

(21) Wimmer, R.; Olsson, M.; Petersen, M. T. N.; HattiKaul, R.; Petersen, S. B.; Muller, N. Towards a molecular level understanding of protein stabilization: The interaction between lysozyme and sorbitol. Journal of Biotechnology 1997, 55, 85-100.

(22) Glish, G. L.; Todd, P. J.; Busch, K. L.; Cooks, R. G. Ms Ms Spectra of Organic Ions Generated by Secondary Ion Mass-Spectrometry. International Journal of Mass Spectrometry and Ion Processes 1984, 56, 177-192.

(23) Barber, M.; Bordoli, R. S.; Sedgwick, R. D.; Tyler, A. N. Fast Atom Bombardment of Solids (Fab) - a New Ion-Source for Mass-Spectrometry. Journal of the Chemical Society-Chemical Communications 1981, 325-327.

(24) Fenselau, C.; Cotter, R. J. Chemical Aspects of Fast-Atorn-Bombardment. Chemical Reviews 1987, 87, 501-512.

(25) Pachuta, S. J.; Cooks, R. G. Mechanisms in Molecular Sims. Chemical Reviews 1987, 87, 647-669.

(26) Karas, M.; Hillenkamp, F. Laser Desorption Ionization of Proteins with Molecular Masses Exceeding 10000 Daltons. Analytical Chemistry 1988, 60, 2299-2301.

(27) Tanaka, K.; Waki, H.; ldo. Y.; Akita, S.; Yoshida, Y.; Yoshida, T., Rapid Communications in Mass Spectrometry 1988, 151-153.

(28) Caprioli, R. M.; Farmer, T. B.; Gile, J. Molecular imaging of biological samples: Localization of peptides and proteins using MALDI-TOF MS. Analytical Chemistry 1997, 69, 4751-4760.

(29) Todd, P. J.; Schaaff, T. G.; Chaurand, P.; Caprioli, R. M. Organic ion imaging of biological tissue with secondary ion mass spectrometry and matrix-assisted laser desorption/ionization. Journal of Mass Spectrometry 2001, 36, 355-369.

(30) Winograd, N. Prospects or imaging TOF-SIMS: from fundamentals to biotechnology. Applied Surface Science 2003, 203, 13-19.

(31) Williams, T. L.; Fenselau, C. p-Nitroaniline/glycerol: a binary liquid matrix for matrix-assisted laser desorption/ionization analysis. European Mass Spectrometry 1998, 4, 379-383.

(32) Ho, Y. P.; Fenselau, C. Applications of 1.06-mu m IR laser desorption on a Fourier transform mass spectrometer. Analytical Chemistry 1998, 70, 4890-4895.

(33) Lavarone, A. T.; Williams, E. R. Mechanism of charging and supercharging molecules in electrospray ionization. Journal of the American Chemical Society 2003, 125, 2319-2327.

(34) Lavarone, A. T.; Williams, E. R. Supercharging in electrospray ionization: effects on signal and charge. International Journal of Mass Spectrometry 2002, 219, 63-72.

(35) Lavarone, A. T.; Jurchen, J. C.; Williams, E. R. Supercharged protein and peptide lone formed by electrospray ionization. Analytical Chemistry 2001, 73, 1455-1460.

(36) Takáts, Z.; Wiseman, J. M.; Gologan, B.; Cooks, R. G. Electrosonic Spray Ionization, A Gentle Technique for Generating Folded Proteins and Protein Complexes in the Gas Phase and for Studying lon-Molecule Reactions at Atmospheric Pressure. Anal. Chem. 2004, 76, 4050-4058.

(37) Sze, E. T. P.; Chan, T. W. D.; Wang, G. Formulation of matrix solutions for use in matrix-assisted laser desorption ionization of biomolecules. Journal of the American Society for Mass Spectrometry 1998, 9, 166-174,

(38) Russell, W. K.; Russell, D. H.; Busby, M. B.; Kolberg, A.; Li, S; Maynard, D. K.; Sanchez-Vindas, S.; Zhu, W.; Vigh, G. Artifact-free matrix-assisted laser desorption ionization time-of-flight mass spectra of tert.-butyldimethylsilyl ether derivatives of cyclodextrins used for the synthesis of single-isomer, chiral resolving agents for capillary electrophoresis. Journal of Chromatography A 2001, 914, 325-330.

(39) Murray, K. K.; Russell, D. H. Liquid Sample Introduction for Matrix-Assisted Laser-Desorption Ionization. Analytical Chemistry 1993, 65, 2534-2537.

(40) Blake, T. A.; Ouyang, Z.; Wiseman, J. M.; Takáts, Z.; Guymon, A. J.; Kothari, A.; Cooks, R. G. Preparative Linear Ion Trap Mass Spectrometer for the Collection of Purified Proteins and Peptides into Arrays Using Ion Soft-Landing manuscript in preparation*.*

(41) Chorush, R. A.; Little, D. P.; Beu, S. C.; Wood, T. D.; McIafferty, F. W. Surface-Induced Dissociation of Multiply Protonated Proteins. Analytical Chemistry 1995, 67, 1042-1046.

(42) Vekey, K. Internal energy effects in mass spectrometry. Journal of Mass Spectrometry 1996, 31, 445-463.

(43) Alvarez, J.; Laskin, J.; Cooks, R. G. Soft-landing of peptides by mass spectrometry manuscript in preparation*.*

(44) Cornett, D. S.; Duncan, M. A.; Amster, I. J. Liquid-Mixtures for Matrix-Assisted Laser-Desorption. Analytical Chemistry 1993, 65, 2608-2613.

(45) Clauser, K. R.; Baker, P.; Burlingame, A. L. Role of accurate mass measurement (+/- 10 ppm) in protein identification strategies employing MS or MS MS and database searching. Analytical Chemistry 1999, 71, 2871-2882.

Other embodiments are within the following claims.

## Claims

1. A method of collecting gaseous ions from a mixture of molecules comprising:
converting at least a portion of the molecules into gas phase ions;
separating the ions according to the ions' mobility; and
depositing by soft landing the separated ions on one or more surfaces carrying a layer of liquid phase material, the gas phase ions and the liquid phase material forming a gas/liquid interface.

2. The method according to claim 1 wherein the ions are accumulated on the gas/liquid interface without neutralization.

3. The method according to claim 1 wherein the ions are accumulated on the gas/liquid interface, the ions being neutralized by landing in the liquid phase material.

4. The method according to any one of the preceding claims wherein the ions landing in the liquid phase layer dissolve after landing.

5. The method according to any one of the preceding claims wherein the ions landing in the liquid phase layer undergo subsequent chemical reactions involving the constituents of the liquid phase layer.

6. The method according to any one of the preceding claims wherein the liquid layer is electrically conductive.

7. The method according to claim 6 wherein the liquid layer is a solution of ionic species.

8. The method according to claim 6 wherein the liquid layer is substantially held together by hydrogen bonds.

9. The method according to claim 8 wherein the liquid layer contains water, glycerol, alcohols, or carbohydrates.

10. The method according to any one of the preceding claims wherein the liquid layer contains light absorbing compounds.

11. The method according to any one of claims 1 to 5 and 10 wherein the liquid is electrically non-conductive.

12. The method according to claim 11 wherein the liquid layer contains hydrocarbons or fluorinated hydrocarbons.

13. The method according to any one of the preceding claims wherein the ions are generated by electrospray, atmospheric pressure chemical ionization, MALDI, or electron impact or chemical ionization.

14. The method according to any one of the preceding claims wherein the ions are analyzed with regard to their mass-to-charge ratio prior to landing.

15. The method according to any one of the preceding claims wherein the ions are fragmented prior to landing.

16. A system for collecting gaseous ions from a mixture of molecules comprising:
an ionizer which converts at least a portion of the molecules into gas phase ions;
a separator which separates the ions according to the ions' mobility; and
a surface in cooperative relationship with the separator, the surface carrying a layer of liquid phase material, the gas phase ions and the liquid phase material forming a gas/liquid interface, the separated ions landing in the liquid phase material.

17. The system of claim 16 wherein the ions are accumulated on the gas/liquid interface without neutralization.

18. The system according to claim 16 wherein the ions are accumulated on the gas/liquid interface, the ions being neutralized by landing on the liquid phase material.

19. The system according to any one of claims 16 to 18 wherein the ions are analyzed with regard to their mass-to-charge ratio prior to landing.

20. The system according to any one of claims 16 to 19 wherein the ions are fragmented prior to landing.
